# EUROPÄISCHE PATENTSCHRIFT

(11) **EP 4 311 788 B1**
(45) Veröffentlichungstag und Bekanntmachung des Hinweises auf die Patenterteilung: **03.09.2025**
(21) Anmeldenummer: 22186783.1
(22) Anmeldetag: 25.07.2022
(51) Int. Cl.: B65B 65/00, B65G 69/18, B65B 43/60, B65G 47/22, B65B 7/28, B65B 43/50, B65G 47/71

(54) **VORRICHTUNG ZUM TRENNEN, BEHANDELN UND WIEDER ZUSAMMENFÜGEN VON MEHRTEILIGEN OBJEKTEN**
DEVICE FOR SEPARATING, TREATING AND REASSEMBLING MULTI-PART OBJECTS
DISPOSITIF DE SÉPARATION, DE TRAITEMENT ET D'ASSEMBLAGE DES OBJETS EN PLUSIEURS PARTIES

(43) Veröffentlichungstag der Anmeldung: 31.01.2024
(73) Patentinhaber: Harro Höfliger Verpackungsmaschinen GmbH, 71573 Allmersbach im Tal (DE)
(72) Erfinder: Bihlmaier, Jonathan, 71573 Allmersbach im Tal (DE); Morschett, Robert, 71573 Allmersbach im Tal (DE); Chambers, Garry, 71573 Allmersbach im Tal (DE); Junger, Michael Carl, 71573 Allmersbach im Tal (DE); Lemaire, Pierre Armand Vincent, 71573 Allmersbach im Tal (DE)
(74) Vertreter: Zurhorst, Stefan

(56) Entgegenhaltungen:
- DE-A1- 19 708 557
- US-A1- 2018 014 999

## Beschreibung

Die Erfindung betrifft eine Vorrichtung zum Trennen, Behandeln und wieder Zusammenfügen von mehrteiligen Objekten.

In zahlreichen Anwendungsgebieten und insbesondere in der Pharmazie werden mehrteilige Objekte mit Bodenteil und Deckelteil beispielsweise als Behälter, Verpackung oder dergleichen eingesetzt. Derartige Objekte werden als Einheit mit auf dem Bodenteil aufgesetztem Deckelteil angeliefert, wie man es beispielsweise von Steckkapseln kennt. Für die Befüllung oder sonstige Behandlung werden die Deckelteile von den Bodenteilen abgezogen. Nach fertiggestellter Bearbeitung werden die Deckelteile wieder aufgesteckt. Derartige Vorgängen werden im Stand der Technik getaktet durchgeführt, um Prozessschritte wie das Öffnen und das Schließen überhaupt zu ermöglichen. Aufgrund der wechselnd beschleunigten und verzögerten Bewegungen limitiert die Taktung aber die Prozessgeschwindigkeit. Die wirkenden Beschleunigungs- und Verzögerungskräfte erfordern einen entsprechenden maschinellen Aufwand und auch eine entsprechende Antriebsleistung. US 2018/014999 A1 offenbart auch eine Vorrichtung nach Oberbegriff des Anspruchs 1.

Der Erfindung liegt die Aufgabe zugrunde, eine Vorrichtung zum Trennen, Behandeln und wieder Zusammenfügen von mehrteiligen Objekten, die für einen kontinuierlichen Betrieb geeignet ist.

Diese Aufgabe wird durch eine Vorrichtung mit den Merkmalen des Anspruchs 1 gelöst.

Nach der Erfindung ist vorgesehen, dass die Vorrichtung ein um eine Drehachse drehend antreibbares Prozessrad für die Aufnahme der Bodenteile und der Deckelteile und für deren Transport entlang mindestens einer Bearbeitungsstation, eine drehend antreibbare Trennvorrichtung für das Trennen der Deckelteile von den Bodenteilen, und eine Einsetzvorrichtung für die Übernahme der Bodenteile und der Deckelteile von der Trennvorrichtung und das Einsetzen der Bodenteile und der Deckelteile in das Prozessrad umfasst. Das Prozessrad hat einen ersten, unteren Aufnahmering und einen zweiten, oberen Aufnahmering als gemeinsam drehbare Einheit. Der erste Aufnahmering ist mit einem ersten Radius konzentrisch zur Drehachse angeordnet und weist eine bestimmte Anzahl von Bodenaufnahmen für die Bodenteile auf. Der zweite Aufnahmering ist mit einem zweiten, im Vergleich zum ersten Radius kleineren Radius konzentrisch zur Drehachse angeordnet und weist die gleiche Anzahl von Deckelaufnahmen für die Deckelteile auf. Die Einsetzvorrichtung weist ein erstes, unteres Einsetzrad mit über den Umfang verteilten Bodenhaltern für die Bodenteile sowie ein zweites, oberes Einsetzrad mit über den Umfang verteilten Deckelhaltern für die Deckelteile auf.

Zwischen der Trennvorrichtung und dem Prozessrad ist eine Räderanordnung angeordnet, wobei die Räderanordnung ein erstes, unteres Rad mit über den Umfang verteilten Bodenhaltern für die Bodenteile sowie ein zweites, oberes Rad mit über den Umfang verteilten Deckelhaltern für die Deckelteile aufweist. Bei dieser Räderanordnung handelt es sich insbesondere um die schon genannte Einsetzvorrichtung mit dem ersten, unteren Einsetzrad und mit dem zweiten, oberen Einsetzrad. Es kann aber auch eine zusätzliche Räderanordnung vorgesehen und beispielsweise zwischen der Trennvorrichtung und der Einsetzvorrichtung, oder zwischen der Einsetzvorrichtung und dem Prozessrad angeordnet sein. Jedenfalls sind die Bodenhalter und/oder die Deckelhalter in Umfangrichtung des jeweils zugeordneten ersten respektive zweiten Rades, insbesondere also die Bodenhalter und/oder die Deckelhalter in Umfangrichtung des jeweils zugeordneten ersten respektive zweiten Einsetzrades derart größer als die jeweils aufgenommenen Bodenteile respektive Deckelteile, dass sie im Betrieb die Bodenteile respektive die Deckelteile mit einem Ausgleichsspiel umgreifen.

Die Erfindung geht von der Idee aus, die getrennten Boden- und Deckelteile gemeinsam auf einem zentralen Prozessrad entlang der vorgesehenen Bearbeitungsstationen zu führen, wobei aber das Auftrennen der Objekte in einzelne Boden- und Deckelteile in einer vorgeschalteten Trennvorrichtung erfolgt. Um auf dem Prozessrad unter guter Platzausnutzung eine möglichst hohe Anzahl von getrennten Boden- und Deckelteilen unterzubringen, ist eine radiale und axiale Positionstrennung vorgesehen: Die Bodenteile werden in einem radial äußeren und in Axialrichtung unteren Aufnahmering gehalten, während die Deckelteile in einem radial inneren und in Axialrichtung oberen Aufnahmering gehalten werden. Auf diese Weise bleiben die Deckelteile im Bereich ihrer Bodenteile und werden gemeinsam infolge einer kontinuierlichen Drehbewegung des Prozessrades kontinuierlich mitbewegt.

Aufgrund der vorgegebenen Winkelgeschwindigkeit des Prozessrades bewirken die unterschiedlichen Radien der beiden Aufnahmeringe zwar gleichförmige, im Betrag jedoch unterschiedliche Umfangsgeschwindigkeiten der Bodenteile und der Deckelteile. Eingangsseitig des Prozessrades haben die die Objekte insgesamt zunächst eine Geschwindigkeit, die für die Bodenteile und die Deckelteile gleich ist. Diese Anlieferungsgeschwindigkeit lässt sich bestenfalls mit nur einer der beiden Umfangsgeschwindigkeiten der Aufnahmeringe synchronisieren. Die nicht synchronisierten Boden- oder Deckelteile müssen eine Geschwindigkeitsanpassung erfahren. Hierfür ist nach der Erfindung die Einsetzvorrichtung vorgesehen. Das definierte Ausgleichsspiel erlaubt es, das die Bodenteile und/oder die Deckelteile im Moment der Übergabe einen verzögernden oder beschleunigenden Geschwindigkeitssprung ausführen und damit an die aktuelle Geschwindigkeit des nachfolgenden Aufnahmerings angepasst werden.

Insgesamt gelingt damit ein kontinuierlicher, nicht intermittierender Betrieb zumindest des zentralen Prozessrades, wobei die Objekte als Ganzes und auch aufgeteilt in Boden- und Deckelteile nahezu gleichförmige Bewegungen mit nur geringen Geschwindigkeitsanpassungen ausführen.

Es kann zweckmäßig sein, die Umlaufgeschwindigkeit der Trennvorrichtung auf die Umlaufgeschwindigkeit des ersten, unteren Aufnahmerings einzustellen, was dann zur Folge hätte, dass die oberen Deckelteile verzögert werden müssten. Alternativ kann es auch zweckmäßig sein, die Umlaufgeschwindigkeit der Trennvorrichtung irgendwo zwischen die beiden verschiedenen Umlaufgeschwindigkeiten der beiden Aufnahmeringe zu legen, wodurch die Deckelteile nur gering verzögert und die Bodenteile gering beschleunigt werden müssten. Es ist jedoch bevorzugt, dass das zweite, obere Einsetzrad der Einsetzvorrichtung und der zweite, obere Aufnahmering des Prozessrades auf eine gleiche Umfangsgeschwindigkeit untereinander und auf eine gleiche Umfangsgeschwindigkeit der Trennvorrichtung abgestimmt sind, und dass die Deckelhalter des zweiten, oberen Einsetzrades ohne Ausgleichsspiel an die Größe der Deckelteile angepasst sind. Damit behalten die Deckelteile beim Durchlauf durch die Trennvorrichtung, die Einsetzvorrichtung und das Prozessrad ihre Geschwindigkeit unverändert bei. Als Folge kann hier auf ein Ausgleichsspiel zur Geschwindigkeitsanpassung verzichtet werden. Lediglich die Bodenteile erfahren eine Geschwindigkeitsanpassung in Form einer Beschleunigung. Im Betrieb hat sich herausgestellt, dass eine solche Beschleunigung im Vergleich zu einer Verzögerung mit höherer Prozesssicherheit gehandhabt werden kann.

Es kann zweckmäßig sein, den genannten Geschwindigkeitssprung bei der Übergabe von der Einsetzvorrichtung an das Prozessrad durchzuführen oder ihn zusätzlich auch auf die Übergabe an das Prozessrad zu verteilen. Bevorzugt sind das erste, untere Einsetzrad der Einsetzvorrichtung und der erste, untere Aufnahmering des Prozessrades auf eine gleiche Umfangsgeschwindigkeit untereinander abgestimmt. Dabei sind die Bodenhalter der Einsetzvorrichtung derart größer als die aufgenommenen Bodenteile, dass sie im Betrieb die Bodenteile mit dem Ausgleichsspiel umgreifen. Außerdem sind untere Objekthalter der Trennvorrichtung derart größer als die aufgenommenen Bodenteile, dass sie im Betrieb die Bodenteile mit einem Ausgleichsspiel umgreifen. Der beschleunigende Geschwindigkeitssprung wird also bei der Übergabe der Bodenteile von der Trennvorrichtung an die Einsetzvorrichtung ausgeführt. Es kann aber auch zweckmäßig sein, den genannten Geschwindigkeitssprung bei der Übernahme von der Einsetzvorrichtung an das Prozessrad durchzuführen, oder ihn anteilig auf die Übernahme von der Trennvorrichtung und die Übergabe an das Prozessrad zu verteilen. Da bei der Übergabe an den unteren Aufnahmering ein Geschwindigkeitssprung fehlt, müssen die zugehörigen Bodenaufnahmen kein Ausgleichsspiel aufweisen. Der Verzicht auf ein Ausgleichsspiel an dieser Stelle bedeutet, dass die Bodenteile exakt positioniert gehalten und entlang der Bearbeitungsstationen geführt werden können. Die Anzahl der Deckelhalter des zweiten Einsetzrades ist vorteilhaft größer und insbesondere um vier größer ist als die Anzahl der Bodenhalter des ersten Einsetzrades. Hierdurch kann eine kompakte Bauform erzielt werden. Zwar gibt es in Umfangsrichtung einen Positionsversatz zwischen Bodenteilen und den jeweils zugeordneten Deckelteilen auf dem Prozessrad. Dieser ist jedoch so gering, dass er bei der Ausschleusung ohne größeren Aufwand wieder rückgängig gemacht werden kann, sodass alle Bodenteile wieder ihre ursprünglichen Deckelteile erhalten.

Bevorzugt ist auch die Trennvorrichtung für den kontinuierlichen, nicht intermittierenden Betrieb ausgelegt. Voraussetzung hierfür ist zunächst, dass die Objekte jeweils eine Hochachse aufweisen, wobei das Deckelteil vorrangig in Richtung der Hochachse vom Bodenteil abnehmbar ist. Hierfür weist die Trennvorrichtung zwei übereinander angeordnete Trennräder mit je einer Drehachse auf, wobei die Drehachsen der Trennräder einander schneiden und dabei um einen Kippwinkel gegeneinander gekippt sind. Das untere Trennrad weist über den Umfang verteilte untere Objekthalter für die Bodenteile auf, wobei das obere Trennrad über den Umfang verteilte obere Objekthalter für die Deckelteile aufweist. Die beiden Trennräder haben einen gleichen Teilkreisdurchmesser und werden gemeinsam mit gleicher Winkelgeschwindigkeit kontinuierlich drehend angetrieben. Infolge des Kippwinkels zwischen den Achsen erfahren die oberen und die unteren Objekthalter zyklisch eine Abstandsveränderung zwischen einem minimalen axialen Abstand und einem maximalen axialen Abstand, und erfahren dabei auch gleichzeitig eine relative Kippbewegung. Die Objekte werden im Bereich des minimalen Abstandes eingespeist. Infolge des anschließend sich vergrößernden Abstandes werden die Deckelteile von den Bodenteilen abgenommen bzw. in einer Schwenkbewegung abgezogen und können im Bereich des maximalen Abstandes getrennt an die nachfolgende Prozessstation übergeben werden. Dies gelingt bei geringem mechanischem Aufbau in einer kontinuierlichen Drehbewegung der Trennräder, sodass hohe Prozessgeschwindigkeiten möglich sind.

In vorteilhafter Weiterbildung ist ein Zuführrad für einzelne Objekte vorgesehen, welches eine Drehachse aufweist und der Trennvorrichtung vorangestellt ist. Die Trennvorrichtung weist in der Draufsicht einen Ort mit minimalem Höhenabstand der unteren und oberen Objekthalter sowie einen Ort mit maximalem Höhenabstand der unteren und oberen Objekthalter auf. Das erste, untere Einsetzrad und das zweite, obere Einsetzrad der Einsetzvorrichtung weisen jeweils eine Drehachse auf. Die Drehachse des Zuführrades, die Drehachsen der Trennräder, die Orte mit dem minimalem und dem maximalen Höhenabstand der unteren und oberen Objekthalter und die Drehachse von mindestens einem Einsetzrad liegen auf einer geraden Verbindungslinie. Hierdurch wird sichergestellt, dass die zunächst noch gefügten Objekte am Ort des minimalen Höhenabstandes der Trennvorrichtung zugeführt werden und von dort aus den maximal zur Verfügung stehenden Trennweg zum Abnehmen des Deckelteils vom Bodenteil erfahren. Am Ort des maximalen Höhenabstandes ist die Trennung vollständig erfolgt, und das Bodenteil und/oder das Deckelteil können kollisionsfrei entnommen werden.

In vorteilhafter Weiterbildung umfasst die erfindungsgemäße Vorrichtung eine Fügevorrichtung zum Zusammenfügen der getrennten Bodenteile und Deckelteile sowie eine Aussetzvorrichtung für die Entnahme der Bodenteile und der Deckelteile aus dem Prozessrad und für die Übergabe der Bodenteile und der Deckelteile an die Fügevorrichtung, wobei die Aussetzvorrichtung ein erstes, unteres Aussetzrad mit über den Umfang verteilten Bodenhaltern für die Bodenteile sowie ein zweites, oberes Aussetzrad mit über den Umfang verteilten Deckelhaltern für die Deckelteile aufweist. Zwischen dem Prozessrad und der Fügevorrichtung ist eine Räderanordnung angeordnet, wobei die Räderanordnung ein erstes, unteres Rad mit über den Umfang verteilten Bodenhaltern für die Bodenteile sowie ein zweites, oberes Rad mit über den Umfang verteilten Deckelhaltern für die Deckelteile aufweist. Bei dieser Räderanordnung handelt es sich insbesondere um die schon genannte Aussetzvorrichtung mit dem ersten, unteren Aussetzrad und mit dem zweiten, oberen Aussetzrad. Es kann aber auch eine zusätzliche Räderanordnung vorgesehen und beispielsweise zwischen dem Prozessrad und der Aussetzvorrichtung, oder zwischen der Aussetzvorrichtung und der Fügevorrichtung angeordnet sein. Jedenfalls sind die Bodenhalter und/oder die Deckelhalter in Umfangrichtung des jeweils zugeordneten ersten respektive zweiten Rades, insbesondere die Bodenhalter und/oder die Deckelhalter in Umfangrichtung des jeweils zugeordneten ersten respektive zweiten Aussetzrades derart größer als die jeweils aufgenommenen Bodenteile respektive Deckelteile, dass sie im Betrieb die Bodenteile respektive die Deckelteile mit einem Ausgleichsspiel umgreifen.

An dieser Stelle gilt analog zu den weiter oben stehenden Ausführungen zur Einsetzvorrichtung, dass zwar die Boden- und Deckelteile auf dem zentralen Prozessrad mit unterschiedlichen Umfangsgeschwindigkeiten bewegt werden, dass aber für die nachfolgende Fügevorrichtung gleiche Geschwindigkeiten gebraucht werden. Wie auch bei der Einsetzvorrichtung kommt hier ein Ausgleichsspiel zum Einsatz welches bei der Übernahme und/oder bei der Übergabe einen die vorgenannte Geschwindigkeitsdifferenz ausgleichenden Geschwindigkeitssprung zulässt.

Auch hier gilt, dass eine Verzögerung der schnelleren Unterteile oder eine Kombination aus Verzögerung der Unterteile und Beschleunigung der Deckelteile vorgenommen werden kann, um die geforderte Angleichung der Geschwindigkeiten zu erzielen. Bevorzugt sind das erste, untere Aussetzrad der Aussetzvorrichtung und der erste, untere Aufnahmering des Prozessrades auf eine gleiche Umfangsgeschwindigkeit untereinander und auf eine gleiche Umfangsgeschwindigkeit der Fügevorrichtung abgestimmt. In der Folge behalten die Bodenteile ihre Geschwindigkeit unverändert bei. Dies erlaubt es, dass die Bodenhalter des ersten, unteren Aussetzrades ohne Ausgleichsspiel an die Größe der Bodenteile angepasst sind.

Wie auch bei der Einsetzvorrichtung gilt, dass die übrigen Teile, hier also die Deckelteile eine Geschwindigkeitsanpassung erfahren müssen. Dies muss vorliegend eine Beschleunigung sein, was gegenüber einer ebenfalls möglichen, optionalen Verzögerung der Bodenteile als prozesssicherer und damit als vorteilhaft angesehen wird. Dieser beschleunigende Geschwindigkeitssprung kann bei der Übernahme der Boden- und Deckelteile vom Prozessrad in die Aussetzvorrichtung durchgeführt werden oder anteilig auch zusätzlich auf die nachfolgende Übergabe an die Fügevorrichtung aufgeteilt werden. Bevorzugt sind jedoch das zweite, obere Aussetzrad der Aussetzvorrichtung und der zweite, obere Aufnahmering des Prozessrades auf eine gleiche Umfangsgeschwindigkeit untereinander abgestimmt. Die Deckelhalter sind dabei derart größer als die aufgenommenen Deckelteile, dass sie im Betrieb die Deckelteile mit dem Ausgleichsspiel umgreifen, wobei die oberen Objekthalter der Fügevorrichtung derart größer sind als die aufgenommenen Deckelteile, dass sie im Betrieb die Deckelteile mit einem Ausgleichsspiel umgreifen. Hier findet also der beschleunigende Geschwindigkeitssprung ausschließlich bei der Übergabe von der Aussetzvorrichtung an die Fügevorrichtung statt. Die Deckelaufnahmen des zweiten Aufnahmeringes brauchen deshalb kein Ausgleichsspiel und können in Form und Größe exakt an die Deckelteile angepasst werden. Die Deckelteile können exakt und lagegenau in den Deckelaufnahmen positioniert und gehalten werden, während sie entlang der Bearbeitungsstationen verfahren werden.

In einer bevorzugten Ausführungsform ist die Anzahl der Bodenhalter des ersten Aussetzrades gleich der Anzahl der Deckelhalter des zweiten Aussetzrades. In einer solchen Ausführungsform müssen beide Aussetzräder derart mit zueinander versetzten Drehachsen positioniert werden, dass sie einerseits mit der Fügevorrichtung und andererseits mit den auf unterschiedlichen Radien befindlichen Aufnahmeringen des Prozessrades zusammenwirken können. Dieser Achsversatz kann so gewählt werden, dass der oben beschriebene Positionsversatz der Deckelteile relativ zu ihren ursprünglichen Bodenteilen auf dem Prozessrad wieder aufgehoben wird. Alle Bodenteile können wieder mit ihren ursprünglichen Deckelteilen gefügt werden. Dies ist insbesondere dann von Bedeutung, wenn die Boden- und Deckelteile auf dem Prozessrad einen Mehrfachumlauf ausführen sollen. Es können dann nämlich alle Bodenteile mit ihren Deckelteilen versehen werden. Andernfalls würden bei einem Mehrfachumlauf einige Bodenteile und einige Deckelteile beim nachfolgenden Ausschleusen keinen Partner mehr finden und müssten dann als Ausschuss entsorgt werden.

Analog zur oben definierten Trennvorrichtung kann die gleiche Bauform auch als Fügevorrichtung eingesetzt werden, sofern die Deckelteile in Richtung der Hochachse auch wieder auf die Bodenteile aufsetzbar sind. Demnach weist die Fügevorrichtung zwei übereinander angeordnete Fügeräder mit je einer Drehachse auf, wobei die Drehachsen der Fügeräder einander schneiden und dabei um einen Kippwinkel gegeneinander gekippt sind, wobei das erste, untere Fügerad über den Umfang verteilte untere Objekthalter für die Bodenteile aufweist, und wobei das zweite, obere Fügerad über den Umfang verteilte obere Objekthalter für die Deckelteile aufweist. Hier werden die getrennten Boden- und Deckelteile im Bereich des maximalen axialen Abstands der Objekthalter aufgenommen. Die sich daran anschließende Verringerung des Abstandes bewirkt, dass die Deckelteile auf die Bodenteile aufgesetzt bzw. in einer Schwenkbewegung aufgesteckt werden. Im Bereich des minimalen axialen Abstandes sind die Objekte vollständig zusammengesteckt bzw. zusammengefügt und werden dort weitergegeben.

Analog zur oben definierten Trennvorrichtung ist in vorteilhafter Weiterbildung ein Transferrad für einzelne Objekte vorgesehen, welches eine Drehachse aufweist und der Fügevorrichtung hintangestellt ist. Die Fügevorrichtung weist in der Draufsicht einen Ort mit minimalem Höhenabstand der unteren und oberen Objekthalter sowie einen Ort mit maximalem Höhenabstand der unteren und oberen Objekthalter auf. Das erste, untere Aussetzrad und das zweite, obere Aussetzrad der Aussetzvorrichtung weisen jeweils eine Drehachse auf. Die Drehachse des Transferrades, die Drehachsen der Fügeräder, die Orte mit dem minimalem und dem maximalen Höhenabstand der unteren und oberen Objekthalter und die Drehachse von mindestens einem Aussetzrad liegen auf einer geraden Verbindungslinie. Hierdurch wird sichergestellt, dass das Bodenteil und/oder das Deckelteil kollisionsfrei am Ort des maximalen Höhenabstandes der Trennvorrichtung zugeführt werden und von dort aus den maximal zur Verfügung stehenden axialen Fügeweg zum Aufsetzen des Deckelteils auf das Bodenteil erfahren. Am Ort des minimalen Höhenabstandes ist die Fügung vollständig erfolgt, und das gefügte Objekt kann entnommen werden.

Die Trennvorrichtung und die Fügevorrichtung werden hier im Zusammenhang mit der erfindungsmäßen Gesamtvorrichtung beschrieben. Darüber hinaus stellen sie aber auch jeweils eine eigenständige Erfindung dar und können als eigenständige Trennvorrichtung und/oder als eigenständige Fügevorrichtung in anderen Bereichen eingesetzt werden.

Vorteilhaft ist im Umfangsbereich des Prozessrades eine Ausschleusestation positioniert, welche untere Ausschleusemittel und obere Ausschleusemittel aufweist, wobei die unteren Ausschleusemittel auf die im ersten Aufnahmering befindlichen Bodenteile in Wirkverbindung bringbar sind, und wobei die oberen Ausschleusemittel auf die im zweiten Aufnahmering befindlichen Deckelteile in Wirkverbindung bringbar sind. Dies erlaubt ein selektives Halten oder Ausschleusen der Boden- und Deckelteile, sodass nach Wahl ein Einfachumlauf möglich ist, woran sich ein gesteuertes Ausschleusen anschließt. Bevorzugt sind jedoch die unteren Ausschleusemittel und die oberen Ausschleusemittel derart ansteuerbar, dass die Bodenteile und die zugeordneten Deckelteile zusammen mit dem Prozessrad mehrere Umläufe ausführen. Hierdurch kann bei Bedarf ein Mehrfachumlauf mit frei wählbarer Umlaufzahl durchgeführt werden. Dies erlaubt das wiederholte Vorbeiführen der Boden- und/oder Deckelteile an den einzelnen Bearbeitungsstationen, um beispielsweise einen mehrfachen Beschichtungsauftrag mit nachfolgendem Trocknungsschritt durchzuführen, wobei erst nach einer ausreichenden Anzahl von Wiederholungen ein Ausschleusen erfolgt.

Ein Ausführungsbeispiel der Erfindung ist nachfolgend anhand der Zeichnung näher beschrieben. Es zeigen:
- Fig. 1: in einer perspektivischen Ansicht ein zweiteiliges Objekt mit einem Bodenteil und mit einem Deckelteil,
- Fig. 2: in einer perspektivischen Ansicht das Objekt nach Fig. 1 mit nach oben abgezogenem Deckelteil,
- Fig. 3: in einer Draufsicht ein Ausführungsbeispiel einer erfindungsgemäß ausgeführten Vorrichtung, umfassend einen Zufuhrtisch, ein Vereinzelungsrad, eine Trennvorrichtung, eine Einsetzvorrichtung, ein zentrales Prozessrad, eine Aussetzvorrichtung, eine Fügevorrichtung, sowie ein Transferrad
- Fig. 4: in einer vergrößerten Detaildarstellung die Vorrichtung nach Fig. 3 im Bereich der Trennvorrichtung und der Einsetzvorrichtung, wobei die Einsetzvorrichtung zwei unterschiedliche Einsetzräder umfasst,
- Fig. 5: die Anordnung nach Fig. 4 im Bereich des unteren Einsetzrades im Zusammenspiel mit Bodenteilen unter Bildung eines Ausgleichsspiels,
- Fig. 6: in einer vergrößerten Detaildarstellung die Vorrichtung nach Fig. 3 im Bereich der Aussetzvorrichtung und der Fügevorrichtung, wobei die Aussetzvorrichtung zwei achsversetzte Aussetzräder umfasst, und wobei das obere Aussetzrad mit Deckelteilen unter Bildung eines Ausgleichsspiels zusammenwirkt,
- Fig. 7: in einer Draufsicht einen Ausschnitt der Vorrichtung nach Fig. 3 mit Einzelheiten der Relativpositionierung von Zuführrad, Trennrad und Einsetzrad sowie der Relativpositionierung von Aussetzrad, Fügerad und Transferrad.
- Fig. 8: in einer Seitenansicht die Trennvorrichtung nach Fig. 3 mit zwei in einem Kippwinkel zueinander stehenden Trennrädern, und
- Fig. 9: in einer Seitenansicht die Fügevorrichtung nach Fig. 3 mit zwei in einem Kippwinkel zueinander stehenden Fügerädern.

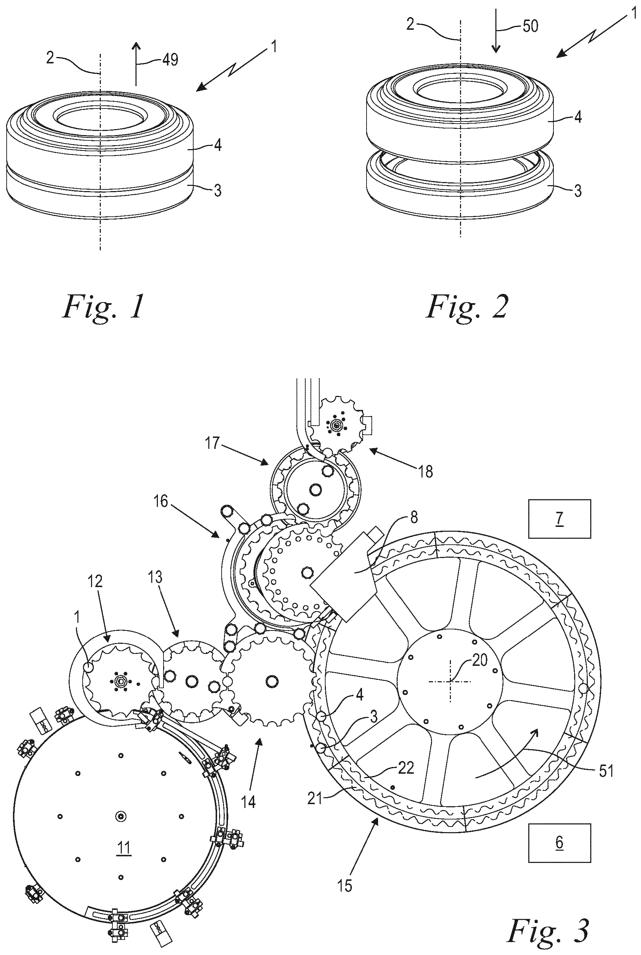

Fig. 1 zeigt in einer perspektivischen Ansicht ein mehrteiliges Objekt 1, welches mit der weiter unten näher beschriebenen Vorrichtung getrennt, behandelt und wieder zusammengefügt werden soll. Das Objekt 1 weist eine Hochachse 2 auf und umfasst zumindest ein Bodenteil 3 und ein Deckelteil 4. Das Deckelteil 4 kann vom Bodenteil 3 getrennt werden, wozu es im gezeigten Ausführungsbeispiel in Richtung der Hochachse 2 nach oben entsprechend einem Pfeil 49 abgezogen werden kann.

Fig. 2 zeigt in perspektivischer Ansicht das Objekt 1 nach Fig. 1 im getrennten Zustand. Das Deckelteil 4 ist vom Bodenteil 3 in Richtung der Hochachse 2 vertikal abgehoben und kann in Gegenrichtung entsprechend einem Pfeil 50 wieder auf das Bodenteil 3 aufgesteckt werden. Im Ausführungsbeispiel nach den Fig. 1 und 2 weisen das Bodenteil 3 und das Deckelteil 4 jeweils eine zylindrische Grundform auf. Es können aber auch abweichende, beispielsweise vieleckige Grundrisse oder dergleichen zweckmäßig sein.

Fig. 3 zeigt in einer Draufsicht ein Ausführungsbeispiel einer erfindungsgemäßen ausgeführten Vorrichtung zum Trennen, Behandeln und wieder Zusammenfügen der mehrteiligen Objekte 1 nach den Fig. 1, 2. Die Vorrichtung umfasst einen Zuführtisch 11, auf welchem die Objekte 1 mit zusammengesteckten Boden- und Deckelteilen 3, 4 (Fig. 1, 2) gesammelt und einem nachfolgenden, als Vereinzelungsrad wirkenden Zuführrad 12 zugeführt werden. Die Objekte 1 werden mittels des Zuführrades 12 einzeln einer nachfolgenden Trennvorrichtung 13 übergeben, in welcher die Deckelteile 4 und die Bodenteile 3 entsprechend der Darstellung nach Fig. 2 in der Hochrichtung, also quer zur Zeichnungsebene der Fig. 3, in einer weiter unten näher beschriebenen Schwenkbewegung voneinander abgenommen werden.

Die solchermaßen voneinander getrennten Bodenteile 3 und Deckelteile 4 werden von der Trennvorrichtung 13 an eine nachfolgende Einsetzvorrichtung 14 übergeben, welche ihrerseits die getrennten Bodenteile 3 und Deckelteile 4 an ein nachfolgendes Prozessrad 15 übergibt. Hierzu ist das Prozessrad 15 mit einem ersten, unteren Aufnahmering 21 für die Bodenteile 3 und einem zweiten, oberen Aufnahmering 22 für die Deckelteile 4 versehen. Das Prozessrad 15 führt die Bodenteile 3 und die Deckelteile 4 an mindestens einer Bearbeitungsstation, hier an beispielhaft zwei nur schematisch angedeuteten Bearbeitungsstationen 6, 7 vorbei. Nach erfolgter Bearbeitung werden die Bodenteile 3 und die Deckelteile 4 an einer Ausschleusestation 8 einer Aussetzvorrichtung 16 übergeben. Die Aussetzvorrichtung 16 bildet Paare von Bodenteilen 3 und Deckelteilen 4 und übergibt diese an eine Fügevorrichtung 17, welche die Deckelteile 4 wieder auf die Bodenteile 3 aufsteckt und als geschlossene Objekte 1 mittels eines Transferrades 18 der Weiterbehandlung wie beispielsweise einer Versiegelung, einer Verpackung oder dergleichen zuführt.

Die Vorrichtung ist insgesamt für einen kontinuierlichen, also nicht intermittierenden Betrieb zumindest im Bereich des Prozessrades 15 ausgelegt, wobei das Prozessrad 15 um eine vertikale Drehachse 20 entsprechend einem Pfeil 51 drehend antreibbar ist. Dies bedeutet, dass die Bodenteile 3 und die Deckelteile 4 im Bereich des Prozessrades 15 kontinuierlich bewegt bzw. kontinuierlich entlang der Bearbeitungsstationen 6, 7 vorbeigeführt werden. Im gezeigten Ausführungsbeispiel wirken die Bearbeitungsstationen 6, 7 nur auf die Bodenteile 3 ein, während die Deckelteile 4 unbearbeitet bleiben. Es kann aber eine Ausführung zweckmäßig sein, bei der alternativ oder zusätzlich auch die Deckelteile 4 eine Bearbeitung erfahren. Beispielhaft sind hier nur zwei Bearbeitungsstationen 6, 7 angedeutet. Es kann aber auch eine abweichende Anzahl vorteilhaft sein.

Es kann zweckmäßig sein, die Bodenteile 3 und die Deckelteile 4 unmittelbar nach einem erstmaligen Passieren der Bearbeitungsstationen 6, 7 an der Ausschleusestation 8 auszuschleusen und mittels der Aussetzvorrichtung 16 der Fügevorrichtung 17 zuzuführen. In diesem Fall arbeiten auch das Zuführrad 12, die Trennvorrichtung 13, die Einsetzvorrichtung 14, die Aussetzvorrichtung 16 und die Fügevorrichtung 17 kontinuierlich durch Drehbewegung um im Wesentlichen vertikale Drehachsen. Die Objekte 1 werden also kontinuierlich getrennt, zugeführt, bearbeitet, ausgeschleust und gefügt.

Vorliegend ist die Vorrichtung jedoch für einen mehrfachen Umlauf der Bodenteile 3 und der Deckelteile 4 mittels des Prozessrades 15 ausgelegt. Hierzu wird zunächst das Prozessrad 15 mit einer bestimmten Anzahl von Bodenteilen 3 und der gleichen Anzahl von Deckelteilen 4 bestückt, woran anschließend die Zufuhr von neuen Objekten 1 unterbrochen wird. Bis zu diesem Zeitpunkt arbeiten auch das Zuführrad 12, die Trennvorrichtung 13 und die Einsetzvorrichtung kontinuierlich, also nicht intermittierend. Beim Einsetzen müssen nicht alle Aufnahmeplätze des Prozessrades 15 belegt werden, und es können auch Lücken frei bleiben. Bevorzugt werden jedoch sämtliche Aufnahmeplätze des Prozessrades 15 mit Bodenteilen 3 und Deckelteilen 4 lückenlos bestückt, wobei hier beispielhaft jeweils 60 Aufnahmeplätze vorhanden sind. Im gezeigten Ausführungsbeispiel erfolgt an der Bearbeitungsstation 6 zunächst ein Beschichtungsauftrag im Zentrumsbereich der Bodenteile 3, während in der nachfolgenden Bearbeitungsstation 7 eine Trocknung der Beschichtung vorgenommen wird. Dies wird infolge eines Mehrfachumlaufes so oft wiederholt, bis die Beschichtung im gewünschten Maß ausgebildet und getrocknet ist. Sobald dies geschehen ist, wird der auf dem Prozessrad vorhandene Vorrat von Bodenteilen 3 und Deckelteilen 4 an der Ausschleusestation ausgeschleust, von der Aussetzvorrichtung 16 an die Fügevorrichtung 17 weitergeleitet und dort zu fertigen Objekten 1 gefügt. Ab dem Zeitpunkt der Ausschleusung arbeiten auch die Aussetzvorrichtung 16 und die Fügevorrichtung 17 kontinuierlich, also nicht intermittierend. Hieran schließt sich dann eine erneute Bestückung des kontinuierlich sich drehenden Prozessrades 15 mit Bodenteilen 3 und Deckelteilen 4 entsprechend der vorstehend beschriebenen Vorgehensweise an, wobei erneut ein lückenloses Bestücken möglich ist.

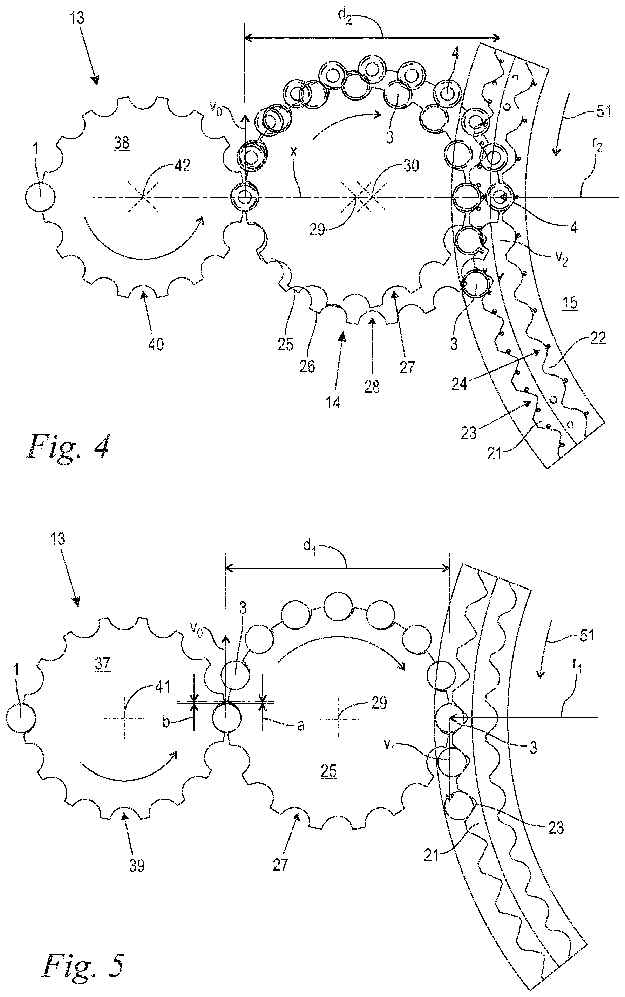

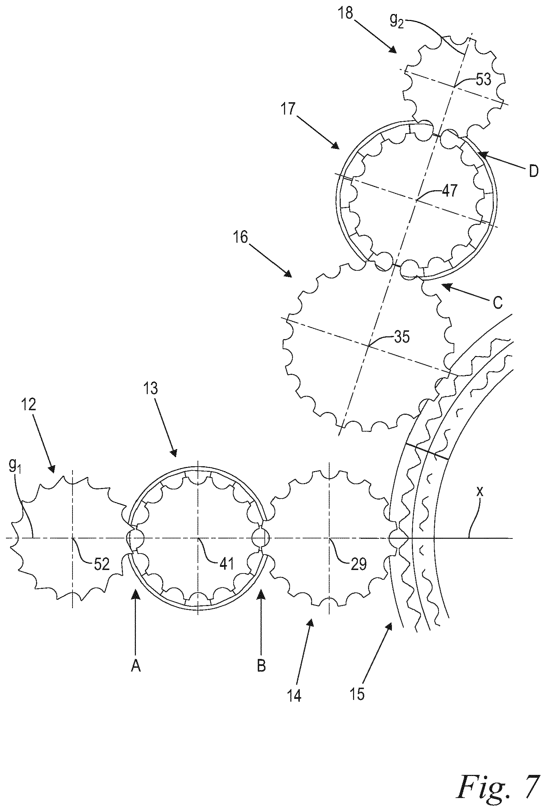

Fig. 4 zeigt in einer vergrößerten Detaildarstellung die Vorrichtung nach Fig. 3 im Bereich der Trennvorrichtung 13, der Einsetzvorrichtung 14 und deren Eingriffsbereich in das Prozessrad 15. Der gleiche Bereich ist auch in Fig. 5 mit Kenntlichmachung zusätzlicher Details gezeigt. Aus der Zusammenschau der Fig. 4 und 5 ergibt sich der strukturelle Aufbau und die Funktion wie folgt: Die Trennvorrichtung 13 umfasst ein erstes, unteres Trennrad 37 (Fig. 5) und ein in Fig. 4 gezeigtes zweites, oberes Trennrad 38, welches sich unmittelbar oberhalb des ersten, unteren Trennrads 37 (Fig. 5) befindet. Das zweite, obere Trennrad 38 ist um eine vertikale Drehachse 42 drehend antreibbar und umfasst auf seiner Umfangsseite etwa kreissegmentförmige, radial nach außen offene obere Objekthalter 40. Analog dazu ist das erste, untere Trennrad 37 (Fig. 5) um eine aufrechte, nahezu vertikale Drehachse 41 drehend antreibbar, und ist auf seiner Umfangsseite mit näherungsweise kreissegmentförmigen unteren Objekthaltern 39 versehen. Die unteren Objekthalter 39 und die oberen Objekthalter 40 greifen die Objekte 1 und trennen sie in Bodenteile 3 und Deckelteile 4 auf, wie es weiter unten im Zusammenhang mit Fig. 7 näher beschrieben ist.

Die Einsetzvorrichtung 14 umfasst ein erstes, unteres Einsetzrad 25 mit einer vertikalen Drehachse 29 sowie ein zweites, oberes Einsetzrad 26 mit einer vertikalen Drehachse 30. Das untere, erste Einsetzrad 25 ist umfangsseitig mit näherungsweise kreissegmentförmigen Bodenhaltern 27 versehen, während das zweite, obere Einsetzrad 26 umfangsseitig mit näherungsweise kreissegmentförmigen Deckelhaltern 28 versehen ist.

Der erste Aufnahmering 21 und der zweite Aufnahmering 22 sind konzentrisch zur Drehachse 20 (Fig. 3) des Prozessrades 15 angeordnet und bilden gemeinsam mit dem Prozessrad 15 eine drehfest verbundene und gemeinsam drehend angetriebene Einheit. Angepasst an den Höhenunterschied zwischen dem ersten, unteren Einsetzrad 25 und dem zweiten, oberen Einsetzrad 26 liegt der zweite Aufnahmering 22 um ein entsprechendes Maß höher als der erste, untere Aufnahmering 21, so dass der erste, untere Aufnahmering 21 die Bodenteile 3 von dem ersten, unteren Einsetzrad 25 übernehmen kann, während der zweite, obere Aufnahmering 22 die Deckelteile 4 von dem zweiten, oberen Einsetzrad 26 übernehmen kann. Radial außenseitig weist der erste Aufnahmering 21 eine bestimmte Anzahl von Bodenaufnahmen 23 für die Bodenteile 3 auf, wobei hier im gezeigten Ausführungsbeispiel insgesamt 60 gleichmäßig über den Umfang verteilte Bodenaufnahmen 23 vorgesehen sind. Analog dazu ist der zweite, obere Aufnahmering 22 mit der gleichen Anzahl von radial nach außen offenen Deckelaufnahmen 24 für die Deckelteile 4 versehen.

Der erste, untere Aufnahmering 21 ist zusammen mit seinen Bodenaufnahmen 23 derart ausgestaltet, dass sich die darin aufgenommenen und gehaltenen Bodenteile 3 auf einem ersten Radius r₁ relativ zur Drehachse 20 (Fig. 3) befinden. Analog dazu ist der zweite, obere Aufnahmering 22 mit seinen Deckelaufnahmen 24 derart ausgestaltet, dass sich die darin gehaltenen Deckelteile 4 auf einem zweiten, im Vergleich zum ersten Radius r₁ kleineren Radius r₂ befinden. Die Differenz zwischen den beiden Radien r₁, r₂ ist derart gewählt, dass die radial innen liegenden Deckelteile 4 die radial weiter außen liegenden Bodenteile 3 in keiner Weise abdecken, und dass die Bearbeitungsstationen 6, 7 (Fig. 3) freien Zugriff auf die Bodenteile 3 haben. Eine Folge davon ist, dass bei einer gegebenen Drehzahl bzw. Winkelgeschwindigkeit des Prozessrades 15 die Bodenteile 3 mit einer dem ersten Radius r₁ entsprechenden Umfangsgeschwindigkeit v₁ bewegt werden, während die radial weiter innen liegenden Deckelteile 4 aufgrund des kleineren Radius r₂ mit einer entsprechend kleineren Umfangsgeschwindigkeit v₂ bewegt werden.

An diesen unterschiedlichen Umfangsgeschwindigkeiten v₁, v₂ richten sich die übrigen Prozessgeschwindigkeiten wie folgt aus: Im gezeigten Ausführungsbeispiel sind die Drehgeschwindigkeiten des zweiten, oberen Einsetzrades 26 der Einsetzvorrichtung 14 und des Prozessrades 15 derart aufeinander abgestimmt, dass sie die Deckelteile 4 mit der gleichen Umfangsgeschwindigkeit v₂ bewegen. Hierauf ist auch die Drehgeschwindigkeit der Trennvorrichtung 13 bzw. des oberen zweiten Trennrades 38 abgestimmt, wonach die Objekte 1 bzw. die Deckelteile 4 mit einer Umfangsgeschwindigkeit v₀ bewegt werden, die gleich der vorgenannten Umfangsgeschwindigkeit v₂ ist.

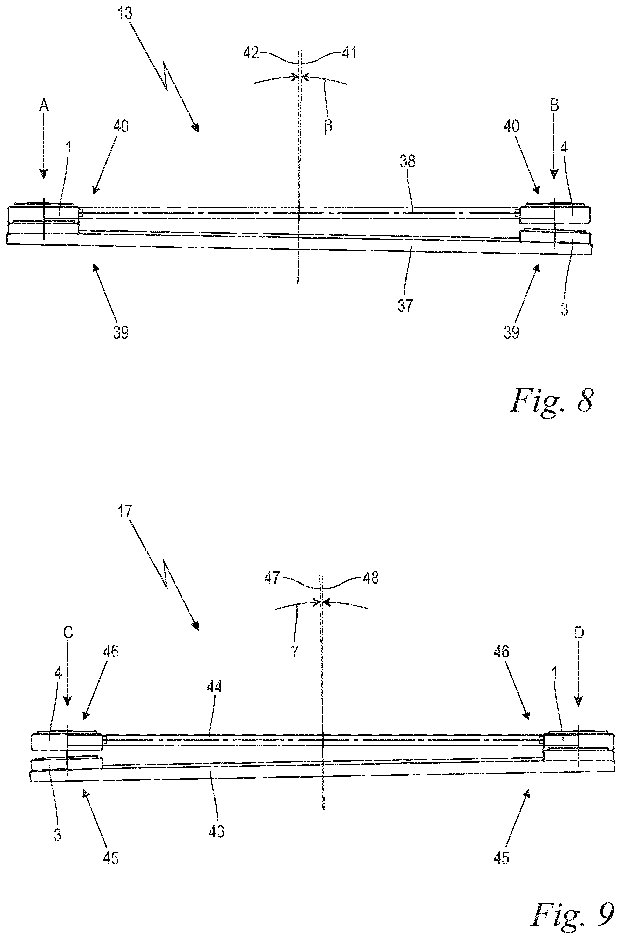

Etwas anders sehen die Geschwindigkeitsverhältnisse im Bereich des unteren Trennrades 37, des unteren Einsetzrades 25 und des unteren Aufnahmerings 21 aus. Die Drehgeschwindigkeit des ersten, unteren Einsetzrades 25 ist derart mit der Drehgeschwindigkeit des Prozessrades 15 abgestimmt, dass beide die Bodenteile 3 mit der gleichen Umfangsgeschwindigkeit v₁ transportieren. Diese ist jedoch größer als die oben beschriebene Umfangsgeschwindigkeit v₂ der Deckelteile 4. Dem steht gegenüber, dass die beiden Trennräder 37, 38 der Trennvorrichtung 13 entsprechend der weiter unten im Zusammenhang mit Fig. 8 folgenden Funktionsbeschreibung bei gleichem Durchmesser mit gleicher Drehgeschwindigkeit bewegt werden. Das untere Trennrad 37 transportiert also die Bodenteile 3 mit der gleichen Umfangsgeschwindigkeit v₀, mit der auch die Deckelteile 4 vom oberen Trennrad 38 transportiert werden. Hieraus folgt, dass die Deckelteile 4 während des Transportes im unteren Trennrad 37 mit der Umfangsgeschwindigkeit v₀ langsamer sind als nachfolgend im unteren Einsetzrad 25 mit der Umfangsgeschwindigkeit v₁. Bei der Übergabe der Bodenteile 3 vom unteren Trennrad 37 an das untere Einsetzrad 25 kommt es also zu einem Geschwindigkeitssprung von der anfänglichen Umfangsgeschwindigkeit v₀ zur nachfolgenden Umfangsgeschwindigkeit v₂.

In Fig. 5 ist deshalb zu erkennen, dass die Bodenhalter 27 zwar im Wesentlichen, nicht jedoch exakt an die Umfangskontur der Bodenteile 3 angepasst sind. Vielmehr sind die Bodenhalter 27 des zugeordneten unteren Einsetzrades 25 in Umfangsrichtung derart größer als die jeweils aufgenommenen Bodenteile 3, dass sie im Betrieb die Bodenteile 3 mit einem Ausgleichsspiel a umgreifen. Sinngemäß das Gleiche gilt auch für die unteren Objekthalter 39 des unteren Trennrades 37, welche die Bodenteile 3 mit einem in Umfangsrichtung wirkenden Ausgleichsspiel b umgreifen. Das Ausgleichsspiel a ermöglicht insbesondere im Zusammenwirken mit dem Ausgleichsspiel b eine Beschleunigung der Bodenteile 3 von ihrer anfänglichen Geschwindigkeit v₀ auf die erhöhte Geschwindigkeit v₁ während der Übergabe vom unteren Trennrad 37 zum unteren Einsetzrad 25. Eine solche Beschleunigung findet in der gezeigten Ausführung bei den Deckelteilen 4 nicht statt, so dass die Deckelhalter 28 des oberen Einsetzrades 26 ohne ein solches Ausgleichsspiel an die Größe und die Form der Deckelteile 4 angepasst sind. Sinngemäß das Gleiche gilt auch für die oberen Objekthalter 40 des oberen Trennrades 38, welche ohne das vorgenannte Ausgleichsspiel b an die Größe und an die Form der Deckelteile 4 angepasst sind. Es kann aber auch eine zusätzliche Räderanordnung für die Ausführung des Geschwindigkeitssprunges vorgesehen und beispielsweise zwischen der Trennvorrichtung 13 und der Einsetzvorrichtung 14, oder zwischen der Einsetzvorrichtung 14 und dem Prozessrad 15 angeordnet sein, wobei dann das Ausgleichsspiel a, ggf. auch das Ausgleichsspiel b in analoger Weise zum Einsatz kommt.

Der Darstellung nach Fig. 4 ist noch entnehmbar, dass die beiden Einsetzräder 25, 26 eine jeweils zugeordnete Drehachse 29, 30 aufweisen. In der gezeigten Draufsicht des Ausführungsbeispiels befinden sich diese Drehachsen 29, 30 auf einer gedachten, geraden Verbindungslinie x, welche durch die Drehachse 20 des Prozessrades 15 (Fig. 3) und die Drehachsen 41, 42 der Trennräder 37, 38 verläuft. Die beiden Trennräder 37, 38 haben den gleichen Durchmesser und die gleiche Anzahl von unteren bzw. oberen Objekthaltern 39, 40, während der Radius r₂ des oberen Aufnahmerings 22 kleiner ist als der Radius r₁ des unteren Aufnahmerings 21. Zur Überbrückung dieser Radiusdifferenz weist das zweite Einsetzrad 26 einen Durchmesser d₂ auf, welcher um die Differenz der ersten und zweiten Radien r₁, r₂ größer ist als ein Durchmesser d₁ des ersten Einsatzrades 25. Hierdurch erfolgt eine lagegenaue Übernahme der Bodenteile 3 und der Deckelteile 4 von der Trennvorrichtung 13 ebenso wie eine lagegenaue Übergabe derselben an den ersten Aufnahmering 21 bzw. an dem kleineren zweiten Aufnahmering 22. Analog zu den genannten unterschiedlichen Durchmessern d₁, d₂ ist die Anzahl der Deckelhalter 28 des zweiten Einsatzrades 26 größer als die Anzahl der Bodenhalter 27 des ersten Einsatzrades 25. Im gezeigten Ausführungsbeispiel ist das zweite Einsetzrad 26 mit zwanzig Deckelhaltern 28 versehen, während das erste Einsetzrad 25 mit nur sechzehn Bodenhaltern 27 versehen ist. Die Anzahl der Deckelhalter 28 ist damit um vier größer als die Anzahl der Bodenhalter 27. Eine Folge davon ist, dass entsprechend der Darstellung nach Fig. 4 die einzelnen Bodenteile 3 in der Drehrichtung 51 um zwei Plätze vor ihren zugehörigen Deckelteilen 4 im Prozessrad 15 zu liegen kommen. Im Rahmen der Erfindung sind aber auch abweichende Konfigurationen möglich, bei denen sich die Drehachsen 29, 30 der Einsetzräder 25, 26 nicht auf der Verbindungslinie x befinden, und wobei andere Durchmesser d₁, d₂ sowie andere Anzahlen von Bodenhalter 27 und Deckelhaltern 28 zur geometrischen bzw. kinematischen Anpassung gewählt werden.

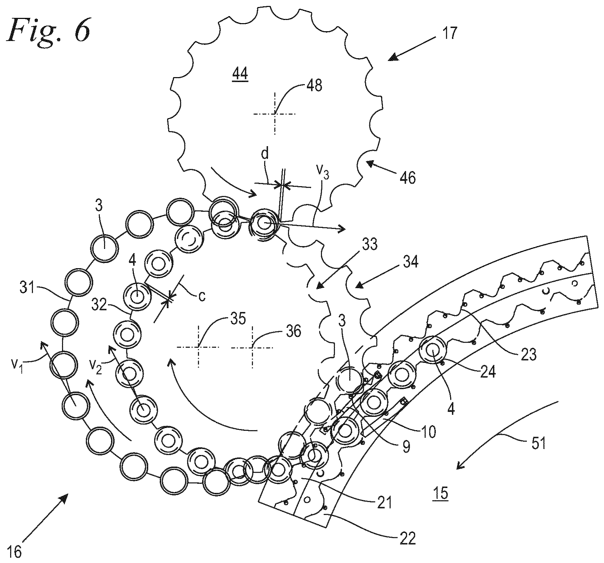

Fig. 6 zeigt in einer vergrößerten Detaildarstellung die Vorrichtung nach Fig. 3 im Bereich der Fügevorrichtung 17, der Aussetzvorrichtung 16 sowie deren Zusammenspiel mit dem Prozessrad 15 im Bereich der Ausschleusestation 8. Die Ausschleusestation 8 umfasst untere, im Bereich des ersten Aufnahmerings 21 befindliche Ausschleusemittel 9 sowie obere, im Bereich des oberen Aufnahmerings 22 angeordnete Ausschleusemittel 10. Die Ausschleusemittel 9, 10 sind jeweils als Schwenkarm ausgeführt und derart positioniert, dass sie im eingeschwenkten Zustand wirkungslos sind, und dass sie im ausgeschwenkten Zustand auf die Bodenteile 3 bzw. auf die Deckelteile 4 einwirken. Demnach drücken die ausgeschwenkten unteren Ausschleusemittel 9 die im unteren Aufnahmering 1 gehaltenen Bodenteile 3 radial nach außen aus ihren Bodenaufnahmen 23 heraus, sodass sie in den Wirkungsbereich der Aussetzvorrichtung 16 gelangen. Sinngemäß das Gleiche gilt auch für die oberen Ausschleusemittel 10, die im ausgeschwenkten Zustand die im zweiten, oberen Aufnahmering 22 gehaltenen Deckelteile 4 aus ihren Deckelaufnahmen 24 radial nach außen herausdrücken und in die Aussetzvorrichtung 16 überführen. Die unteren Ausschleusemittel 9 und die oberen Ausschleusemittel 10 sind über eine hier nicht gezeigte Steuereinheit derart ansteuerbar, dass die Bodenteile 3 und die zugeordneten Deckelteile 4 zusammen mit dem Prozessrad 15 zunächst mehrere Umläufe ausführen und dann erst ausgeschleust werden.

Vergleichbar zur Einsetzvorrichtung 14 (Fig. 4, 5) umfasst die Aussetzvorrichtung 16 ein erstes, unteres Aussetzrad 31, welches um eine Drehachse 35 drehend antreibbar ist, sowie ein zweites, oberes Aussetzrad 32, welches um eine Drehachse 36 drehend antreibbar ist. Das erste, untere Aussetzrad 31 ist umfangsseitig mit radial nach außen offenen, kreissegmentförmigen Bodenhaltern 33 versehen, während das zweite, obere Aussetzrad 32 umfangsseitig mit radial nach außen offenen, näherungsweise kreissegmentförmigen Deckelhaltern 34 versehen ist. Die beiden Aussetzräder 31, 32 weisen einen Höhenversatz zueinander auf, der dem Höhenversatz des zweiten Aufnahmerings 22 gegenüber dem ersten Aufnahmering 21 entspricht. Dabei sind die Aussetzräder 31, 32 derart angeordnet, dass sie mit ihren Bodenhaltern 33 bzw. Deckelhaltern 34 die an der Ausschleusestation 8 ausgeworfenen Bodenteile 3 bzw. Deckelteile 4 aufnehmen können.

Die Fügevorrichtung 17 entspricht in ihrem grundsätzlichen Aufbau im Wesentlichen der im Zusammenhang mit den Fig. 4 und 5 beschriebenen Trennvorrichtung 13. Aus der Zusammenschau der Fig. 6 und 9 ergibt sich, dass die Fügevorrichtung 17 ein erstes, unteres Fügerad 43 mit einer aufrechten, nahezu senkrechten Drehachse 47 sowie ein zweites, oberes Fügerad 44 mit einer senkrechten Drehachse 48 umfasst. Die beiden Fügeräder 43, 44 sind auf ihren äußeren Umfangsseiten mit unteren bzw. oberen Objekthaltern 45, 46 versehen und haben einen gleichen Durchmesser. Sie werden mit gleicher Drehzahl betrieben, so dass die in den Objekthaltern 45, 46 aufgenommenen Bodenteile 3 bzw. Deckelteile 4 mit einer gleichen Umfangsgeschwindigkeit v₃ bewegt werden.

Das erste, untere Aussetzrad 31 der Aussetzvorrichtung 16 ist in seiner Drehgeschwindigkeit an die Drehgeschwindigkeit des Prozessrades 15 derart angepasst, dass die vom ersten, unteren Aufnahmering 21 mit der Umfangsgeschwindigkeit v₁ angelieferten Bodenteile 3 unter Beibehaltung dieser Umfangsgeschwindigkeit v₁, also ohne Beschleunigung oder Verzögerung in den Bodenhaltern 33 des ersten, unteren Aussetzrades 31 weitertransportiert werden. Hieran ist auch die Drehgeschwindigkeit der Fügevorrichtung 17 derart angepasst, dass ihre Umfangsgeschwindigkeit v₃ gleich der vorgenannten Umfangsgeschwindigkeit v₁ ist. Die Bodenteile 3 werden also unter Beibehaltung der Umfangsgeschwindigkeit v₁ = v₃, also ohne Beschleunigung oder Verzögerung vom unteren Fügerad 43 (Fig.9) übernommen und weiterbewegt.

Analog dazu ist die Drehgeschwindigkeit des zweiten, oberen Aussetzrades 32 derart an die Drehgeschwindigkeit des Prozessrades 15 angepasst, dass die mit der geringeren Umfangsgeschwindigkeit v₂ vom zweiten Aufnahmering 22 angelieferten Deckelteile 4 unter Beibehaltung dieser Umfangsgeschwindigkeit v₂ vom zweiten, oberen Aussetzrad 32 übernommen und in deren Deckelhalter 34 weitertransportiert werden.

Diese zweite Umfangsgeschwindigkeit v₂ ist jedoch kleiner als die Umfangsgeschwindigkeit v₃ der Fügevorrichtung 17. Bei der Übergabe der Deckelteile 4 vom oberen Aussetzrad 32 an das obere Fügerad 44 kommt es daher zu einem Geschwindigkeitssprung, in dem die Deckelteile 4 von der zweiten Umfangsgeschwindigkeit v₂ auf die dritte Umfangsgeschwindigkeit v₃ beschleunigt werden. Um dies zu ermöglichen, sind die Deckelhalter 34 des zweiten oberen Aussetzrades 32 nur näherungsweise an die Umfangskontur der Deckelteile 4 angepasst. Zwar sind sie entsprechend dem Durchmesser der Deckelteile 4 annähernd kreissegmentförmig ausgebildet, wobei sie jedoch derart größer sind als die aufgenommenen Deckelteile 4, dass sie im Betrieb die Deckelteile 4 mit einem in Drehrichtung wirksamen Ausgleichsspiel c umgreifen. Sinngemäß das Gleiche gilt auch für die oberen Objekthalter 46 des oberen Fügerades 44, welche ebenfalls die aufgenommenen Deckelteile 4 im Betrieb mit einem in Drehrichtung wirkenden Ausgleichsspiel d umgreifen. Das Ausgleichsspiel c ermöglicht insbesondere im Zusammenspiel mit dem Ausgleichsspiel d die Beschleunigung der Deckelteile 4 während der Übergabe von den Deckelhaltern 34 des oberen Aussetzrades 32 an die oberen Objekthalter 46 des oberen Fügerades 44. Analog zum weiter oben beschriebenen Bereich der Einsetzvorrichtung 14 kann aber auch hier im Bereich der Aussetzvorrichtung 16 eine zusätzliche Räderanordnung für die Ausführung des Geschwindigkeitssprunges vorgesehen und beispielsweise zwischen dem Prozessrad 15 und der Aussetzvorrichtung 16, oder zwischen der Aussetzvorrichtung 16 und der Fügevorrichtung 17 angeordnet sein, wobei dann das Ausgleichsspiel c, ggf. auch das Ausgleichsspiel d in analoger Weise zum Einsatz kommt.

Aus den vorgenannten Ausführungen ergibt sich, dass die Bodenteile 3 und die Deckelteile 4 bei ihrem Durchlauf vom Zuführrad 12 bis hin zur Fügevorrichtung 17 (Fig. 3) entweder ihre Geschwindigkeit beibehalten oder beschleunigt werden, wodurch die aufgrund der unterschiedlichen Radien r₁, r₂ zwangsläufig vorhandenen unterschiedlichen Umfangsgeschwindigkeiten v₁, v₂ der Aufnahmeringe 21, 22 kompensiert werden. Im gezeigten bevorzugten Ausführungsbeispiel erfahren die Bodenteile 3 und die Deckelteile 4 keinerlei Verzögerung. Im Rahmen der Erfindung ist aber auch eine Geschwindigkeitskompensation unter Einwirkung einer Verzögerung der Bodenteile 3 und/oder der Deckelteile 4 möglich. Vorliegend wird der Geschwindigkeitssprung jeweils bei der Übergabe von der Trennvorrichtung 13 an die Einsetzvorrichtung 14 bzw. von der Aussetzvorrichtung 16 an die Fügevorrichtung 17 vorgenommen. Im Rahmen der Erfindung ist es aber auch möglich, durch entsprechende Drehzahlanpassung und Einsatz eines Ausgleichsspiels den jeweiligen Geschwindigkeitssprung auch bei der Übergabe an das Prozessrad 15 und/oder bei der Übernahme vom Prozessrad 15 auszuführen.

Anders als bei der Einsetzvorrichtung 14 weisen die Aussetzräder 31, 32 hier beispielhaft die gleiche Anzahl von Bodenhaltern 33 bzw. Deckelhaltern 34 auf, wobei ebenfalls beispielhaft jeweils zwanzig Bodenhalter 33 und zwanzig Deckelhalter 34 vorgesehen sind. Ein weiterer Unterschied zur Einsetzvorrichtung 14 (Fig. 4) besteht darin, dass die Drehachsen 35, 36 nicht unmittelbar zwischen den Drehachsen 47, 48 der Fügevorrichtung 17 und der Drehachse 20 des Prozessrades 15 (Fig. 3) liegen. Vielmehr sind sie seitlich dazu versetzt und auch in Umfangsrichtung gegeneinander versetzt. Hierdurch wird einerseits erreicht, dass die beiden Aussetzräder 31, 32 bei gleichem Durchmesser in den Wirkungsbereich der Fügevorrichtung 17 und außerdem in den Wirkungsbereich der auf unterschiedlichen Radien r₁, r₂ befindlichen Aufnahmeringe 21, 22 gelangen. Andererseits bewirkt der Versatz der Drehachsen 35, 36, dass jedes Deckelteil 4 wieder seinem ursprünglichen Bodenteil 3 zugeführt bzw. zugeordnet wird. Im Zusammenhang mit Fig. 4 wurde ja beschrieben, dass die Bodenteile 3 ihren zugeordneten Deckelteilen 4 und zwei Aufnahmeplätze vorauseilen. Dieses Vorauseilen wird durch die gezeigte Anordnung und Ausgestaltung der Aussetzräder 31, 32 wieder rückgängig gemacht. Die gleiche Wirkung lässt sich im Rahmen der Erfindung aber auch durch eine abweichende Positionierung der Drehachsen 35, 36 der Aussetzräder 31, 32 mit unterschiedlichen Durchmessern und unterschiedlichen Anzahlen von Bodenhaltern 33 und Deckelhaltern 34 realisieren.

Fig. 7 zeigt in einer Draufsicht einen Ausschnitt der Vorrichtung nach Fig. 3 im Bereich des Zuführrades 12, der Trennvorrichtung 13, der Einsetzvorrichtung 14, der Aussetzvorrichtung 16, der Fügevorrichtung 17 und des Transferrades 18. Das Zuführrad 12 weist eine Drehachse 52 aufweist und ist der Trennvorrichtung 13 funktional vorangestellt. Die Einsetzvorrichtung 14 folgt funktional der Trennvorrichtung 13. Mit anderen Worten durchlaufen die Objekte 1 (Fig. 1 bis 3) zunächst das Zuführrad 12, dann die Trennvorrichtung 13 und daran anschließend die Einsetzvorrichtung 14. Von der Trennvorrichtung 13 ist hier nur das erste, untere Trennrad 37 mit seiner Drehachse 41 gezeigt, während von der Einsetzvorrichtung 14 und das erste, untere Einsetzrad 25 mit der zugehörigen Drehachse 29 gezeigt ist.

Außerdem gibt es Orte A und B, deren Funktion weiter unten im Zusammenhang mit Fig. 8 beschrieben ist. Die Drehachse 52 des Zuführrades 12, die Drehachse 41 des unteren Trennrades 37, die Orte A, B und die Drehachse 29 unteren Einsetzrades 25 liegen auf einer geraden Verbindungslinie g₁. Aus der Zusammenschau mit Fig. 4 ergibt sich noch, dass auch die Drehachse 42 des oberen Trennrades 38 und die Drehachse 30 des oberen Einsetzrades 26 auf dieser geraden Verbindungslinie g₁ liegen.

Sinngemäß das gleiche gilt auch für die Aussetzvorrichtung 16, die Fügevorrichtung 17 und das Transferrad 18: Die Aussetzvorrichtung 16 ist der Fügevorrichtung 17 funktional vorangestellt. Das Transferrad 18 weist eine Drehachse 53 auf und ist funktional der Fügevorrichtung 17 hintangestellt. Mit anderen Worten durchlaufen die Objekte 1 (Fig. 1 bis 3) zunächst die Aussetzvorrichtung 16, dann die Fügevorrichtung 17 und daran anschließend das Transferrad 18. Von der Aussetzvorrichtung 16 ist hier nur das erste, untere Aussetzrad 31 mit der zugehörigen Drehachse 35 gezeigt, während von der Fügevorrichtung 17 nur das erste, untere Fügerad 43 mit seiner Drehachse 47 gezeigt ist. Außerdem gibt es Orte C und D, deren Funktion weiter unten im Zusammenhang mit Fig. 9 beschrieben ist. Die Drehachse 53 des Transferrades 18, die Drehachse 47 des unteren Fügerades 43, die Orte C, D und die Drehachse 35 von dem unteren Aussetzrad 31 liegen auf einer geraden Verbindungslinie g₂. Aus der Zusammenschau mit den Fig. 6 und 9 ergibt sich noch, dass auch die Drehachse 48 des oberen Fügerades 44 auf dieser geraden Verbindungslinie g₂ liegen.

Fig. 8 zeigt in einer Seitenansicht die Trennvorrichtung 13 nach Fig. 3 mit den beiden Trennrädern 37, 38. Weiter oben wurde erwähnt, dass die zugehörigen Drehachsen 41, 42 näherungsweise senkrecht verlaufen. Damit ist gemeint, dass zumindest eine der beiden Drehachsen 41, 42 nicht exakt senkrecht liegt. Vorliegend ist die Drehachse 42 des oberen Trennrades 38 senkrecht, während die Drehachse 41 des unteren Trennrades 37 leicht gegenüber der Senkrechten gekippt ist. Zwischen beiden befindet sich ein Kippwinkel β, welcher so gewählt ist, dass die unteren und oberen Objekthalter 39, 40 an einem Ort A einen minimalen vertikalen Höhenabstand und bezogen auf die Drehachsen 41 42 gegenüberliegend an einem Ort B einen maximalen vertikalen Höhenabstand zueinander aufweisen. Infolge der im Zusammenhang mit Fig. 7 beschriebenen Achspositionierung auf der Verbindungslinie g₁ grenzt der Ort A des minimalen Höhenabstandes an das Führungsrad 12 an, während der Ort B des maximalen vertikalen Höhenabstandes an die Einsetzvorrichtung 14 angrenzt. Am Ort A des minimalen Abstandes werden also die Objekte 1 im zusammengesteckten Zustand vom Zuführrad 12 übernommen, wobei die Objekte 1 von den unteren Objekthaltern 39 an den Bodenteilen 3 und von den oberen Objekthaltern 40 an den Deckelteilen 4 gegriffen werden. Bei der nachfolgenden Drehbewegung vergrößert sich der axiale Abstand zwischen den unteren Objekthaltern 39 und den oberen Objekthaltern 40 bis zu dem genannten Maximum, in dessen Folge die Deckelteile 4 und die Bodenteile 3 infolge einer Schwenkbewegung vorrangig in der Hochrichtung voneinander abgezogen bzw. abgenommen werden. Der Kippwinkel β beträgt beispielhaft 1° und ist jedenfalls so bemessen, dass die Vergrößerung des axialen Abstandes dazu ausreicht, die Deckelteile 4 und die Bodenteile 3 vollständig voneinander abzunehmen, so dass die Bodenteile 3 und die Deckelteile 4 getrennt voneinander am Ort B des maximalen Abstandes an die Einsetzvorrichtung 14 übergeben werden können. An den solchermaßen erreichten Höhenversatz der Deckelteile 4 gegenüber den Bodenteilen 3 sind auch der Höhenunterschied zwischen den Einsetzrädern 25, 26 der Einsetzvorrichtung 14, der Höhenunterschied zwischen den beiden Aufnahmeringen 21, 22 des Prozessrades 15, und die Höhenunterschiede zwischen den Aussetzrädern 31, 32 der Aussetzvorrichtung 16 angepasst.

Fig. 9 zeigt in einer Seitenansicht die Fügevorrichtung 17 nach Fig. 3, welche analog zur Trennvorrichtung 13 nach Fig. 8 aufgebaut ist. Die Drehachsen 47, 48 der beiden Fügeräder 43, 44 sind um einen Kippwinkel γ zueinander geneigt. Beispielhaft ist die Drehachse 48 des oberen Fügerades 44 senkrecht, während die Drehachse 47 des unteren Fügerades 43 leicht gegenüber der Senkrechten gekippt ist. In der Folge gibt es einen Ort C mit maximalem Höhenabstand der unteren und oberen Objekthalter 45, 46 sowie einen Ort D mit minimalem Höhenabstand der unteren und oberen Objekthalter 45, 46. Infolge der im Zusammenhang mit Fig. 7 beschriebenen Achspositionierung auf der Verbindungslinie g₂ grenzt der Ort C des maximalen Höhenabstandes die Aussetzvorrichtung 16 an, während der Ort D des minimalen vertikalen Höhenabstandes an das Transferrad 18 angrenzt. Die unteren Objekthalter 45 übernehmen am Ort des maximalen Abstandes C die Bodenteile 3 von der Aussetzvorrichtung 16. Da sich die Drehachse 36 des oberen Aussetzrades 32 nicht auf der vorstehend erwähnten Verbindungslinie g₂ befindet, übernehmen die oberen Objekthalter 46 nicht unmittelbar am Ort des maximalen Abstandes C die von den Bodenteilen 3 getrennten Deckelteile 4 von der Aussetzvorrichtung 16, wohl aber in ausreichender Nähe dazu. Entlang ihres weiteren Umlaufes bis zum Ort D des minimalen Höhenabstandes verringern die Objekthalter 45, 46 und damit auch die Bodenteile 3 und die Deckelteile 4 ihren Abstand zueinander derart, dass die Deckelteile 4 auf die Bodenteile 3 unter Bildung der fertigen Objekte 1 in einer Schwenkbewegung aufgesetzt werden und von dort schließlich am Ort D des minimalen Höhenabstandes an das Transferrad 18 übergeben und der Weiterverarbeitung zugeführt werden. Der Kippwinkel γ ist hier gleich dem Kippwinkel β nach Fig. 8 und beträgt 1°, kann aber auch abweichend sein.

## Patentansprüche

1. Vorrichtung zum Trennen, Behandeln und wieder Zusammenfügen von mehrteiligen Objekten (1) in einem kontinuierlichen Betrieb, wobei die Objekte (1) jeweils ein Bodenteil (3) und ein vom Bodenteil trennbares Deckelteil (4) aufweisen, umfassend ein um eine Drehachse (20) drehend antreibbares Prozessrad (15) für die Aufnahme der Bodenteile (3) und der Deckelteile (4) und für deren Transport entlang mindestens einer Bearbeitungsstation (6, 7), eine drehend antreibbare Trennvorrichtung (13) für das Trennen der Deckelteile (4) von den Bodenteilen (5), und eine Einsetzvorrichtung (14) für die Übernahme der Bodenteile (3) und der Deckelteile (4) von der Trennvorrichtung (13) und das Einsetzen der Bodenteile (3) und der Deckelteile (4) in das Prozessrad (15),
**dadurch gekennzeichnet, dass**
das Prozessrad (15) einen ersten, unteren Aufnahmering (21) und einen zweiten, oberen Aufnahmering (22) als gemeinsam drehbare Einheit hat, wobei der erste Aufnahmering (21) mit einem ersten Radius (r₁) konzentrisch zur Drehachse (20) angeordnet ist und eine bestimmte Anzahl von Bodenaufnahmen (23) für die Bodenteile (3) aufweist, wobei der zweite Aufnahmering (22) mit einem zweiten, im Vergleich zum ersten Radius (r₁) kleineren Radius (r₂) konzentrisch zur Drehachse (20) angeordnet ist und die gleiche Anzahl von Deckelaufnahmen (24) für die Deckelteile (4) aufweist, wobei die Einsetzvorrichtung (14) ein erstes, unteres Einsetzrad (25) mit über den Umfang verteilten Bodenhaltern (27) für die Bodenteile (3) sowie ein zweites, oberes Einsetzrad (26) mit über den Umfang verteilten Deckelhaltern (28) für die Deckelteile (4) aufweist, wobei zwischen der Trennvorrichtung (13) und dem Prozessrad (15) eine Räderanordnung angeordnet ist, wobei die Räderanordnung ein erstes, unteres Rad mit über den Umfang verteilten Bodenhaltern für die Bodenteile (3) sowie ein zweites, oberes Rad mit über den Umfang verteilten Deckelhaltern für die Deckelteile (4) aufweist, wobei die Bodenhalter und/oder die Deckelhalter in Umfangrichtung des jeweils zugeordneten ersten respektive zweiten Rades derart größer sind als die jeweils aufgenommenen Bodenteile (3) respektive Deckelteile (4), dass sie im Betrieb die Bodenteile (3) respektive die Deckelteile (4) mit einem Ausgleichsspiel umgreifen.

2. Vorrichtung nach Anspruch 1,
**dadurch gekennzeichnet, dass** die Räderanordnung durch die Einsetzvorrichtung (14) mit dem ersten, unteren Einsetzrad (25) und mit dem zweiten, oberen Einsetzrad (26) gebildet ist, und dass die Bodenhalter (27) und/oder die Deckelhalter (28) in Umfangrichtung des jeweils zugeordneten ersten respektive zweiten Einsetzrades (25, 26) derart größer sind als die jeweils aufgenommenen Bodenteile (3) respektive Deckelteile (4), dass sie im Betrieb die Bodenteile (3) respektive die Deckelteile (4) mit einem Ausgleichsspiel (a) umgreifen.

3. Vorrichtung nach Anspruch 2,
**dadurch gekennzeichnet, dass** das zweite, obere Einsetzrad (26) der Einsetzvorrichtung (14) und der zweite, obere Aufnahmering (22) des Prozessrades (15) auf eine gleiche Umfangsgeschwindigkeit (v₂) untereinander und auf eine gleiche Umfangsgeschwindigkeit (v₀) der Trennvorrichtung (13) abgestimmt sind, und dass die Deckelhalter (28) des zweiten, oberen Einsetzrades (26) ohne Ausgleichsspiel (a) an die Größe der Deckelteile (4) angepasst sind.

4. Vorrichtung nach Anspruch 3,
**dadurch gekennzeichnet, dass** das erste, untere Einsetzrad (25) der Einsetzvorrichtung (14) und der erste, untere Aufnahmering (21) des Prozessrades (15) auf eine gleichen Umfangsgeschwindigkeit (v₁) untereinander abgestimmt sind, dass die Bodenhalter (27) derart größer sind als die aufgenommenen Bodenteile (3), dass sie im Betrieb die Bodenteile (3) mit dem Ausgleichsspiel (a) umgreifen, und dass untere Objekthalter (39) der Trennvorrichtung (13) derart größer sind als die aufgenommenen Bodenteile (3), dass sie im Betrieb die Bodenteile (3) mit einem Ausgleichsspiel (b) umgreifen.

5. Vorrichtung nach einem der Ansprüche 1 bis 4,
**dadurch gekennzeichnet, dass** die Anzahl der Deckelhalter (28) des zweiten Einsetzrades (26) größer ist und insbesondere um vier größer ist als die Anzahl der Bodenhalter (27) des ersten Einsetzrades (25).

6. Vorrichtung nach einem der Ansprüche 1 bis 5,
**dadurch gekennzeichnet, dass** die Objekte (1) jeweils eine Hochachse (2) aufweisen, wobei das Deckelteil (4) vorrangig in Richtung der Hochachse (2) vom Bodenteil (3) abnehmbar ist, wobei die Trennvorrichtung (13) zwei übereinander angeordnete Trennräder (37, 38) mit je einer Drehachse (41, 42) aufweist, wobei die Drehachsen (41, 42) der Trennräder (37, 38) einander schneiden und dabei um einen Kippwinkel (β) gegeneinander gekippt sind, wobei das untere Trennrad (37) über den Umfang verteilte untere Objekthalter (39) für die Bodenteile (3) aufweist, und wobei das obere Trennrad (38) über den Umfang verteilte obere Objekthalter (40) für die Deckelteile (4) aufweist.

7. Vorrichtung nach Anspruch 6,
**dadurch gekennzeichnet, dass** ein Zuführrad (12) für einzelne Objekte (1) eine Drehachse (52) aufweist und der Trennvorrichtung (13) vorangestellt ist, dass die Trennvorrichtung (13) in der Draufsicht einen Ort (A) mit minimalem Höhenabstand der unteren und oberen Objekthalter (39, 40) sowie einen Ort (B) mit maximalem Höhenabstand der unteren und oberen Objekthalter (39, 40) aufweist, dass das erste, untere Einsetzrad (25) und das zweite, obere Einsetzrad (26) der Einsetzvorrichtung (14) jeweils eine Drehachse (29, 30) aufweisen, und dass die Drehachse (52) des Zuführrades (12), die Drehachsen (41, 42) der Trennräder (37, 38), die Orte (A, B) mit dem minimalem und dem maximalen Höhenabstand der unteren und oberen Objekthalter (39, 40) und die Drehachse (29, 30) von mindestens einem Einsetzrad (25, 26) auf einer geraden Verbindungslinie (g₁) liegen.

8. Vorrichtung nach einem der Ansprüche 1 bis 7,
**dadurch gekennzeichnet, dass** die Vorrichtung eine Fügevorrichtung (17) zum Zusammenfügen der getrennten Bodenteile (3) und Deckelteile (4) sowie eine Aussetzvorrichtung (16) für die Entnahme der Bodenteile (3) und der Deckelteile (4) aus dem Prozessrad (15) und für die Übergabe der Bodenteile (3) und der Deckelteile (4) an die Fügevorrichtung (17) umfasst, wobei die Aussetzvorrichtung (16) ein erstes, unteres Aussetzrad (31) mit über den Umfang verteilten Bodenhaltern (33) für die Bodenteile (3) sowie ein zweites, oberes Aussetzrad (32) mit über den Umfang verteilten Deckelhaltern (34) für die Deckelteile (4) aufweist, wobei zwischen dem Prozessrad (15) und der Fügevorrichtung (17) eine Räderanordnung angeordnet ist, wobei die Räderanordnung ein erstes, unteres Rad mit über den Umfang verteilten Bodenhaltern für die Bodenteile (3) sowie ein zweites, oberes Rad mit über den Umfang verteilten Deckelhaltern für die Deckelteile (4) aufweist, wobei die Bodenhalter und/oder die Deckelhalter in Umfangrichtung des jeweils zugeordneten ersten respektive zweiten Rades derart größer sind als die jeweils aufgenommenen Bodenteile (3) respektive Deckelteile (4), dass sie im Betrieb die Bodenteile (3) respektive die Deckelteile (4) mit einem Ausgleichsspiel umgreifen.

9. Vorrichtung nach Anspruch 8,
**dadurch gekennzeichnet, dass** die Räderanordnung durch die Aussetzvorrichtung (16) mit dem ersten, unteren Aussetzrad (31) und mit dem zweiten, oberen Aussetzrad (32) gebildet ist, und dass die Bodenhalter (27) und/oder die Deckelhalter (28) in Umfangrichtung des jeweils zugeordneten ersten respektive zweiten Aussetzrades (31, 32) derart größer sind als die jeweils aufgenommenen Bodenteile (3) respektive Deckelteile (4), dass sie im Betrieb die Bodenteile (3) respektive die Deckelteile (4) mit einem Ausgleichsspiel (c) umgreifen.

10. Vorrichtung nach Anspruch 9,
**dadurch gekennzeichnet, dass** das erste, untere Aussetzrad (31) der Aussetzvorrichtung (16) und der erste, untere Aufnahmering (21) des Prozessrades (15) auf eine gleiche Umfangsgeschwindigkeit (v₁) untereinander und auf eine gleiche Umfangsgeschwindigkeit (v₃) der Fügevorrichtung (17) abgestimmt sind, und dass die Bodenhalter (33) des ersten, unteren Aussetzrades (31) ohne Ausgleichsspiel (c) an die Größe der Bodenteile (3) angepasst sind.

11. Vorrichtung nach Anspruch 10,
**dadurch gekennzeichnet, dass** das zweite, obere Aussetzrad (32) der Aussetzvorrichtung (16) und der zweite, obere Aufnahmering (22) des Prozessrades (15) auf eine gleiche Umfangsgeschwindigkeit (v₂) untereinander abgestimmt sind, dass die Deckelhalter (34) derart größer sind als die aufgenommenen Deckelteile (4), dass sie im Betrieb die Deckelteile (4) mit dem Ausgleichsspiel (c) umgreifen, und dass obere Objekthalter (46) der Fügevorrichtung (17) derart größer sind als die aufgenommenen Deckelteile (4), dass sie im Betrieb die Deckelteile (4) mit einem Ausgleichsspiel (d) umgreifen.

12. Vorrichtung nach einem der Ansprüche 8 bis 11,
**dadurch gekennzeichnet, dass** die Anzahl der Bodenhalter (33) des ersten Aussetzrades (31) gleich der Anzahl der Deckelhalter (34) des zweiten Aussetzrades (32) ist.

13. Vorrichtung nach einem der Ansprüche 8 bis 12,
**dadurch gekennzeichnet, dass** die Objekte (1) jeweils eine Hochachse (2) aufweisen, wobei das Deckelteil (4) vorrangig in Richtung der Hochachse (2) auf das Bodenteil (3) aufsetzbar ist, wobei die Fügevorrichtung (17) zwei übereinander angeordnete Fügeräder (43, 44) mit je einer Drehachse (47, 48) aufweist, wobei die Drehachsen (47, 48) der Fügeräder (37, 38) einander schneiden und dabei um einen Kippwinkel (γ) gegeneinander gekippt sind, wobei das untere Fügerad (37) über den Umfang verteilte untere Objekthalter (45) für die Bodenteile (3) aufweist, und wobei das obere Fügerad (38) über den Umfang verteilte obere Objekthalter (46) für die Deckelteile (4) aufweist.

14. Vorrichtung nach Anspruch 13,
**dadurch gekennzeichnet, dass** ein Transferrad (18) für einzelne Objekte (1) eine Drehachse (53) aufweist und der Fügevorrichtung (17) hintangestellt ist, dass die Fügevorrichtung (17) in der Draufsicht einen Ort (C) mit maximalem Höhenabstand der unteren und oberen Objekthalter (45, 46) sowie einen Ort (D) mit minimalem Höhenabstand der unteren und oberen Objekthalter (45, 46) aufweist, dass das erste, untere Aussetzrad (31) und das zweite, obere Aussetzrad (32) der Aussetzvorrichtung (16) jeweils eine Drehachse (35, 36) aufweisen, und dass die Drehachse (53) des Transferrades (18), die Drehachsen (47, 48) der Fügeräder (43, 44), die Orte (C, D) mit dem minimalem und dem maximalen Höhenabstand der unteren und oberen Objekthalter (45, 46) und die Drehachse (35, 36) von mindestens einem Aussetzrad (31, 32) auf einer geraden Verbindungslinie (g₂) liegen.

15. Vorrichtung nach einem der Ansprüche 1 bis 14,
**dadurch gekennzeichnet, dass** im Umfangsbereich des Prozessrades (15) eine Ausschleusestation (8) positioniert ist, welche untere Ausschleusemittel (9) und obere Ausschleusemittel (10) aufweist, wobei die unteren Ausschleusemittel (9) auf die im ersten Aufnahmering (21) befindlichen Bodenteile (3) in Wirkverbindung bringbar sind, und wobei die oberen Ausschleusemittel (10) auf die im zweiten Aufnahmering (22) befindlichen Deckelteile (4) in Wirkverbindung bringbar sind.

16. Vorrichtung nach Anspruch 15,
**dadurch gekennzeichnet, dass** die unteren Ausschleusemittel (9) und die oberen Ausschleusemittel (10) derart ansteuerbar sind, dass die Bodenteile (3) und die zugeordneten Deckelteile (4) zusammen mit dem Prozessrad (15) mehrere Umläufe ausführen.

## Claims

1. Device for separating, treating and rejoining multipiece objects (1) in continuous operation, wherein the objects (1) each have a bottom piece (3) and a cover piece (4) which is separable from the bottom piece, said device comprising a process wheel (15) drivable in rotation about a rotational axis (20) for receiving the bottom pieces (3) and the cover pieces (4) and for transporting them along at least one processing station (6, 7); a separating device (13) drivable in rotation for separating the cover pieces (4) from the bottom pieces (5); and an insert device (14) for taking the bottom pieces (3) and the cover pieces (4) from the separating device (13) and inserting the bottom pieces (3) and the cover pieces (4) in the process wheel (15);
**characterized in that** the process wheel (15) has a first lower receiving ring (21) and a second upper receiving ring (22) which are jointly rotatable as a unit; wherein the first receiving ring (21) with a first radius (r₁) is arranged concentrically to the rotational axis (20) and has a specific number of bottom receivers (23) for the bottom pieces (3); wherein the second receiving ring (22) with a second radius (r₂) which is smaller than the first radius (r₁) is arranged concentrically to the rotational axis (20) and has the same number of cover receivers (24) for the cover pieces (4); wherein the insert device (14) has a first lower insert wheel (25) with bottom holders (27) for the bottom pieces (3) distributed around the periphery, and a second upper insert wheel (26) with cover holders (28) for the cover pieces (4) distributed around the periphery; wherein a wheel assembly is arranged between the separating device (13) and the process wheel (15); wherein the wheel assembly has a first lower wheel with bottom holders for the bottom pieces (3) distributed around the periphery, and a second upper wheel with cover holders for the cover pieces (4) distributed around the periphery; wherein the bottom holders and/or the cover holders in the circumferential direction of the respectively assigned first or second wheel are larger than the respectively received bottom pieces (3) or cover pieces (4) such that, in operation, they surround the bottom pieces (3) or the cover pieces (4) with a compensation play.

2. Device according to claim 1,
**characterized in that** the wheel assembly is formed by the insert device (14) with the first lower insert wheel (25) and the second upper insert wheel (26); and **in that** the bottom holders (27) and/or the cover holders (28) in the circumferential direction of the respectively assigned first or second insert wheel (25, 26) are larger than the respectively received bottom pieces (3) or cover pieces (4) such that, in operation, they surround the bottom pieces (3) or the cover pieces (4) with a compensation play (a).

3. Device according to claim 2,
**characterized in that** the second upper insert wheel (26) of the insert device (14) and the second upper receiving ring (22) of the process wheel (15) are set to a same circumferential speed (v₂) as one another and a same circumferential speed (v₀) of the separating device (13); and **in that** the cover holders (28) of the second upper insert wheel (26) are adapted to the size of the cover pieces (4) without compensation play (a).

4. Device according to claim 3,
**characterized in that** the first lower insert wheel (25) of the insert device (14) and the first lower receiving ring (21) of the process wheel (15) are set to a same circumferential speed (v₁) as one another; **in that** the bottom holders (27) are larger than the received bottom pieces (3) such that, in operation, they surround the bottom pieces (3) with the compensation play (a); and **in that** lower object holders (39) of the separating device (13) are larger than the received bottom pieces (3) such that, in operation, they surround the bottom pieces (3) with a compensation play (b).

5. Device according to one of claims 1 to 4,
**characterized in that** the number of cover holders (28) of the second insert wheel (26) is greater, and in particular greater by four, than the number of bottom holders (27) of the first insert wheel (25).

6. Device according to one of claims 1 to 5,
**characterized in that** the objects (1) each have a vertical axis (2), wherein the cover piece (4) is removable from the bottom piece (3) primarily in the direction of the vertical axis (2); wherein the separating device (13) has two separating wheels (37, 38) arranged one above the other and each with a rotational axis (41, 42); wherein the rotational axes (41, 42) of the separating wheels (37, 38) intersect one another and are tilted relative to one another by a tilt angle (β); wherein the lower separating wheel (37) has lower object holders (39) for the bottom pieces (3) distributed over the periphery, and wherein the upper separating wheel (38) has upper object holders (40) for the cover pieces (4) distributed over the periphery.

7. Device according to claim 6,
**characterized in that** a supply wheel (12) for individual objects (1) has a rotational axis (52) and is arranged in front of the separating device (13), **in that** in top view, the separating device (13) has a location (A) with minimal vertical spacing of the lower and upper object holders (39, 40) and a location (B) with maximal vertical spacing of the lower and upper object holders (39, 40); **in that** the first lower insert wheel (25) and the second upper insert wheel (26) of the insert device (14) each have a rotational axis (29, 30); and **in that** the rotational axis (52) of the supply wheel (12), the rotational axes (41, 42) of the separating wheels (37, 38), the locations (A, B) with minimal and maximal vertical spacing of the lower and upper object holders (39, 40), and the rotational axis (29, 30) of at least one insert wheel (25, 26), lie on a straight connecting line (g₁).

8. Device according to one of claims 1 to 7,
**characterized in that** the device has a joining device (17) for joining together the separated bottom pieces (3) and cover pieces (4), and an extraction device (16) for removing the bottom pieces (3) and the cover pieces (4) from the process wheel (15) and for transferring the bottom pieces (3) and the cover pieces (4) to the joining device (17); wherein the extraction device (16) has a first lower extraction wheel (31) with bottom holders (33) for the bottom pieces (3) distributed over the periphery and a second upper extraction wheel (32) with cover holders (34) for the cover pieces (4) distributed over the periphery; wherein a wheel assembly is arranged between the process wheel (15) and the joining device (17); wherein the wheel assembly comprises a first lower wheel with bottom holders for the bottom pieces (3) distributed over the periphery and a second upper wheel with cover holders for the cover pieces (4) distributed over the periphery; wherein the bottom holders and/or the cover holders in the circumferential direction of the respectively assigned first or second wheel are larger than the respectively received bottom pieces (3) or cover pieces (4) such that, in operation, they surround the bottom pieces (3) or the cover pieces (4) with a compensation play.

9. Device according to claim 8,
**characterized in that** the wheel assembly is formed by the extraction device (16) with the first lower extraction wheel (31) and the second upper extraction wheel (32), and **in that** the bottom holders (27) and/or the cover holders (28) in the circumferential direction of the respectively assigned first or second extraction wheel (31, 32) are larger than the respectively received bottom pieces (3) or cover pieces (4) such that, in operation, they surround the bottom pieces (3) or the cover pieces (4) with a compensation play (c).

10. Device according to claim 9,
**characterized in that** the first lower extraction wheel (31) of the extraction device (16) and the first lower receiving ring (21) of the process wheel (15) are set to a same circumferential speed (v₁) as one another and to a same circumferential speed (v₃) of the joining device (17); and **in that** the bottom holders (33) of the first lower extraction wheel (31) are adapted to the size of the bottom pieces (3) without compensation play (c).

11. Device according to claim 10,
**characterized in that** the second upper extraction wheel (32) of the extraction device (16) and the second upper receiving ring (22) of the process wheel (15) are set to a same circumferential speed (v₂) as one another; **in that** the cover holders (34) are larger than the received cover pieces (4) such that, in operation, they surround the cover pieces (4) with the compensation play (c); and **in that** upper object holders (46) of the joining device (17) are larger than the received cover pieces (4) such that, in operation, they surround the cover pieces (4) with a compensation play (d).

12. Device according to one of claims 8 to 11,
**characterized in that** the number of bottom holders (33) of the first extraction wheel (31) is equal to the number of cover holders (34) of the second extraction wheel (32).

13. Device according to one of claims 8 to 12,
**characterized in that** the objects (1) each have a vertical axis (2), wherein the cover piece (4) can be placed on the bottom piece (3) primarily in the direction of the vertical axis (2); wherein the joining device (17) has two joining wheels (43, 44) arranged one above the other and each with a rotational axis (47, 48), wherein the rotational axes (47, 48) of the joining wheels (37, 38) intersect one another and are tilted relative to one another by a tilt angle (γ), wherein the lower joining wheel (37) has lower object holders (45) for the bottom pieces (3) distributed over the periphery, and wherein the upper joining wheel (38) has upper object holders (46) for the cover pieces (4) distributed over the periphery.

14. Device according to claim 13,
**characterized in that** a transfer wheel (18) for individual objects (1) has a rotational axis (53) and is arranged behind the joining device (17), **in that** in top view, the joining device (17) has a location (C) with maximal vertical spacing of the lower and upper object holders (45, 46) and a location (D) with minimal vertical spacing of the lower and upper object holders (45, 46); **in that** the first lower extraction wheel (31) and the second upper extraction wheel (32) of the extraction device (16) each have a rotational axis (35, 36); and **in that** the rotational axis (53) of the transfer wheel (18), the rotational axes (47, 48) of the joining wheels (43, 44), the locations (C, D) with minimal and maximal vertical spacing of the lower and upper object holders (45, 46), and the rotational axis (35, 36) of at least one extraction wheel (31, 32), lie on a straight connecting line (g2).

15. Device according to one of claims 1 to 14,
**characterized in that** an output lock station (8) is positioned in the circumferential region of the process wheel (15), which has lower output lock means (9) and upper output lock means (10), wherein the lower output lock means (9) can be brought into active connection on the bottom pieces (3) situated in the first receiving ring (21), and wherein the upper output lock means (10) can be brought into active connection on the cover pieces (4) situated in the second receiving ring (22).

16. Device according to claim 15,
**characterized in that** the lower output lock means (9) and the upper output lock means (10) can be controlled such that the bottom pieces (3) and the assigned cover pieces (4) execute multiple revolutions together with the process wheel (15).

## Revendications

1. Dispositif pour séparer, traiter et réassembler des objets (1) en plusieurs parties dans un mode de fonctionnement continu, les objets (1) présentant chacun une partie de fond (3) et une partie de couvercle (4) séparable de la partie de fond, comprenant une roue de processus (15) pouvant être entraînée en rotation autour d'un axe de rotation (20) pour la réception des parties de fond (3) et des parties de couvercle (4) et pour leur transport le long d'au moins une station de traitement (6, 7), un dispositif de séparation (13) pouvant être entraîné en rotation pour la séparation des parties de couvercle (4) des parties de fond (5), et un dispositif d'insertion (14) pour la prise en charge des parties de fond (3) et des parties de couvercle (4) par le dispositif de séparation (13) et l'insertion des parties de fond (3) et des parties de couvercle (4) dans la roue de processus (15), **caractérisé en ce que** la roue de processus (15) a une première bague de réception inférieure (21) et une deuxième bague de réception supérieure (22) en tant qu'unité pouvant tourner ensemble, la première bague de réception (21) étant agencée avec un premier rayon (r₁) concentriquement à l'axe de rotation (20) et présentant un nombre déterminé de réceptacles de fond (23) pour les parties de fond (3), la deuxième bague de réception (22) étant agencée avec un deuxième rayon (r₂), inférieur au premier rayon (r₁), concentriquement à l'axe de rotation (20) et présentant le même nombre de réceptacles de couvercle (24) pour les parties de couvercle (4), le dispositif d'insertion (14) présentant une première roue d'insertion inférieure (25) avec des supports de fond (27) répartis sur la périphérie pour les parties de fond (3) ainsi qu'une deuxième roue d'insertion supérieure (26) avec des supports de couvercle (28) répartis sur la périphérie pour les parties de couvercle (4), un agencement de roues étant agencé entre le dispositif de séparation (13) et la roue de processus (15), l'agencement de roues présentant une première roue inférieure avec des supports de fond répartis sur la périphérie pour les parties de fond (3) ainsi qu'une deuxième roue supérieure avec des supports de couvercle répartis sur la périphérie pour les parties de couvercle (4), les supports de fond et/ou les supports de couvercle étant, dans la direction périphérique de la première ou de la deuxième roue respectivement associée, plus grands que les parties de fond (3) ou les parties de couvercle (4) respectivement reçues de telle sorte qu'ils entourent en fonctionnement les parties de fond (3) ou les parties de couvercle (4) avec un jeu de compensation.

2. Dispositif selon la revendication 1,
**caractérisé en ce que** l'agencement de roues est formé par le dispositif d'insertion (14) avec la première roue d'insertion inférieure (25) et avec la deuxième roue d'insertion supérieure (26), et **en ce que** les supports de fond (27) et/ou les supports de couvercle (28) sont, dans la direction périphérique de la première ou de la deuxième roue d'insertion (25, 26) respectivement associée, plus grands que les parties de fond (3) ou les parties de couvercle (4) respectivement reçues, de telle sorte qu'en fonctionnement, ils entourent les parties de fond (3) ou les parties de couvercle (4) avec un jeu de compensation (a).

3. Dispositif selon la revendication 2,
**caractérisé en ce que** la deuxième roue d'insertion supérieure (26) du dispositif d'insertion (14) et la deuxième bague de réception supérieure (22) de la roue de processus (15) sont accordées à une même vitesse périphérique (v₂) entre elles et à une même vitesse périphérique (v₀) du dispositif de séparation (13), et **en ce que** les supports de couvercle (28) de la deuxième roue d'insertion supérieure (26) sont adaptés à la taille des parties de couvercle (4) sans jeu de compensation (a).

4. Dispositif selon la revendication 3,
**caractérisé en ce que** la première roue d'insertion inférieure (25) du dispositif d'insertion (14) et la première bague de réception inférieure (21) de la roue de processus (15) sont accordées entre elles à une même vitesse périphérique (v₁), **en ce que** les supports de fond (27) sont plus grands que les parties de fond (3) reçues de telle sorte qu'en fonctionnement, ils entourent les parties de fond (3) avec le jeu de compensation (a), et **en ce que** les supports d'objet inférieurs (39) du dispositif de séparation (13) sont plus grands que les parties de fond (3) reçues de telle sorte qu'en fonctionnement, ils entourent les parties de fond (3) avec un jeu de compensation (b).

5. Dispositif selon l'une quelconque des revendications 1 à 4,
**caractérisé en ce que** le nombre de supports de couvercle (28) de la deuxième roue d'insertion (26) est supérieur, et notamment supérieur de quatre, au nombre de supports de fond (27) de la première roue d'insertion (25).

6. Dispositif selon l'une quelconque des revendications 1 à 5,
**caractérisé en ce que** les objets (1) présentent respectivement un axe vertical (2), la partie de couvercle (4) pouvant être retirée de la partie de fond (3) en priorité dans la direction de l'axe vertical (2), le dispositif de séparation (13) présentant deux roues de séparation (37, 38) agencées l'une au-dessus de l'autre avec chacune un axe de rotation (41, 42), les axes de rotation (41, 42) des roues de séparation (37, 38) se coupant l'un l'autre et étant alors basculés l'un par rapport à l'autre d'un angle de basculement (β), la roue de séparation inférieure (37) présentant des supports d'objets inférieurs (39) répartis sur la périphérie pour les parties de fond (3), et la roue de séparation supérieure (38) présentant des supports d'objets supérieurs (40) répartis sur la périphérie pour les parties de couvercle (4).

7. Dispositif selon la revendication 6,
**caractérisé en ce qu'**une roue d'amenée (12) pour des objets individuels (1) présente un axe de rotation (52) et est placée devant le dispositif de séparation (13), **en ce que** le dispositif de séparation (13) présente, en vue de dessus, un emplacement (A) avec une distance en hauteur minimale des supports d'objets inférieur et supérieur (39, 40) ainsi qu'un emplacement (B) avec une distance en hauteur maximale des supports d'objets inférieur et supérieur (39, 40), **en ce que** la première roue d'insertion inférieure (25) et la deuxième roue d'insertion supérieure (26) du dispositif d'insertion (14) présentent respectivement un axe de rotation (29, 30), et **en ce que** l'axe de rotation (52) de la roue d'amenée (12), les axes de rotation (41, 42) des roues de séparation (37, 38), les emplacements (A, B) avec la distance en hauteur minimale et maximale des supports d'objets inférieur et supérieur (39, 40) et l'axe de rotation (29, 30) d'au moins une roue d'insertion (25, 26) se situent sur une ligne de liaison droite (g₁).

8. Dispositif selon l'une quelconque des revendications 1 à 7,
**caractérisé en ce que en ce que** le dispositif comprend un dispositif d'assemblage (17) pour assembler les parties de fond (3) et les parties de couvercle (4) séparées, ainsi qu'un dispositif de dépôt (16) pour retirer les parties de fond (3) et les parties de couvercle (4) de la roue de processus (15) et pour transférer les parties de fond (3) et les parties de couvercle (4) vers le dispositif d'assemblage (17), le dispositif de dépôt (16) présentant une première roue de dépôt inférieure (31) avec des supports de fond (33) répartis sur la périphérie pour les parties de fond (3) ainsi qu'une deuxième roue de dépôt supérieure (32) avec des supports de couvercle (34) répartis sur la périphérie pour les parties de couvercle (4), un agencement de roues étant agencé entre la roue de processus (15) et le dispositif d'assemblage (17), l'agencement de roues présentant une première roue inférieure avec des supports de fond répartis sur la périphérie pour les parties de fond (3) ainsi qu'une deuxième roue supérieure avec des supports de couvercle répartis sur la périphérie pour les parties de couvercle (4), les supports de fond et/ou les supports de couvercle étant, dans la direction périphérique de la première ou de la deuxième roue respectivement associée, plus grands que les parties de fond (3) ou les parties de couvercle (4) respectivement reçues, de telle sorte qu'ils entourent les parties de fond (3) ou les parties de couvercle (4) avec un jeu de compensation pendant le fonctionnement.

9. Dispositif selon la revendication 8,
**caractérisé en ce que** l'agencement de roues est formé par le dispositif de dépôt (16) avec la première roue de dépôt inférieure (31) et avec la deuxième roue de dépôt supérieure (32), et **en ce que** les supports de fond (27) et/ou les supports de couvercle (28) sont, dans la direction périphérique de la première ou de la deuxième roue de dépôt (31, 32) respectivement associée, plus grands que les parties de fond (3) ou les parties de couvercle (4) respectivement reçues, de telle sorte qu'ils entourent en fonctionnement les parties de fond (3) ou les parties de couvercle (4) avec un jeu de compensation (c).

10. Dispositif selon la revendication 9,
**caractérisé en ce que** la première roue de dépôt inférieure (31) du dispositif de dépôt (16) et la première bague de réception inférieure (21) de la roue de processus (15) sont accordées à une même vitesse périphérique (v₁) entre elles et à une même vitesse périphérique (v₃) du dispositif d'assemblage (17), et **en ce que** les supports de fond (33) de la première roue de dépôt inférieure (31) sont adaptés sans jeu de compensation (c) à la taille des pièces de fond (3).

11. Dispositif selon la revendication 10,
**caractérisé en ce que** la deuxième roue de dépôt supérieure (32) du dispositif de dépôt (16) et la deuxième bague de réception supérieure (22) de la roue de processus (15) sont accordées entre elles à une même vitesse périphérique (v₂), **en ce que** les supports de couvercle (34) sont plus grands que les parties de couvercle (4) reçues de telle sorte qu'en fonctionnement, ils entourent les parties de couvercle (4) avec le jeu de compensation (c), et **en ce que** les supports d'objet supérieurs (46) du dispositif d'assemblage (17) sont plus grands que les parties de couvercle (4) reçues de telle sorte qu'en fonctionnement, ils entourent les parties de couvercle (4) avec un jeu de compensation (d).

12. Dispositif selon l'une quelconque des revendications 8 à 11,
**caractérisé en ce que** le nombre de supports de fond (33) de la première roue de dépôt (31) est égal au nombre de supports de couvercle (34) de la deuxième roue de dépôt (32).

13. Dispositif selon l'une quelconque des revendications 8 à 12,
**caractérisé en ce que** les objets (1) présentent respectivement un axe vertical (2), la partie de couvercle (4) pouvant être posée sur la partie de fond (3) en priorité dans la direction de l'axe vertical (2), le dispositif d'assemblage (17) présentant deux roues d'assemblage (43, 44) agencées l'une au-dessus de l'autre avec chacune un axe de rotation (47, 48), les axes de rotation (47, 48) des roues d'assemblage (37, 38) se coupant l'un l'autre et étant alors basculés l'un par rapport à l'autre d'un angle de basculement (γ), la roue d'assemblage inférieure (37) présentant des supports d'objet inférieurs (45) répartis sur la périphérie pour les parties de fond (3), et la roue d'assemblage supérieure (38) présentant des supports d'objet supérieurs (46) répartis sur la périphérie pour les parties de couvercle (4).

14. Dispositif selon la revendication 13,
**caractérisé en ce qu'**une roue de transfert (18) pour des objets individuels (1) présente un axe de rotation (53) et est placée derrière le dispositif d'assemblage (17), **en ce que** le dispositif d'assemblage (17) présente, en vue de dessus, un emplacement (C) avec une distance en hauteur maximale entre les supports d'objets inférieur et supérieur (45, 46) ainsi qu'un emplacement (D) avec une distance en hauteur minimale entre les supports d'objets inférieur et supérieur (45, 46), **en ce que** la première roue de dépôt inférieure (31) et la deuxième roue de dépôt supérieure (32) du dispositif de dépôt (16) présentent respectivement un axe de rotation (35, 36), et **en ce que** l'axe de rotation (53) de la roue de transfert (18), les axes de rotation (47, 48) des roues d'assemblage (43, 44), les emplacements (C, D) avec la distance en hauteur minimale et maximale entre les supports d'objets inférieur et supérieur (45, 46) et l'axe de rotation (35, 36) d'au moins une roue de dépôt (31, 32) se situent sur une ligne de liaison droite (g₂).

15. Dispositif selon l'une quelconque des revendications 1 à 14,
**caractérisé en ce que** dans la zone périphérique de la roue de processus (15) est positionné une station d'éjection (8) qui présente des moyens d'éjection inférieurs (9) et des moyens d'éjection supérieurs (10), les moyens d'éjection inférieurs (9) pouvant être amenés en liaison active sur les parties de fond (3) se trouvant dans la première bague de réception (21), et les moyens d'éjection supérieurs (10) pouvant être amenés en liaison active sur les parties de couvercle (4) se trouvant dans la deuxième bague de réception (22).

16. Dispositif selon la revendication 15,
**caractérisé en ce que** les moyens d'éjection inférieurs (9) et les moyens d'éjection supérieurs (10) peuvent être commandés de telle sorte que les parties de fond (3) et les parties de couvercle (4) associées effectuent plusieurs rotations conjointement avec la roue de processus (15).
